(19) Europäisches Patentamt
European Patent Office
Office européen des brevets

(11) **EP 3 931 159 B1**

## (12) EUROPÄISCHE PATENTSCHRIFT

(45) Veröffentlichungstag und Bekanntmachung des Hinweises auf die Patenterteilung:
**14.01.2026  Patentblatt 2026/03**

(21) Anmeldenummer: **20710063.7**

(22) Anmeldetag: **25.02.2020**

(51) Internationale Patentklassifikation (IPC):
**C03B 37/012** $^{(2006.01)}$   **A61C 13/15** $^{(2006.01)}$
**C03B 23/047** $^{(2006.01)}$   **C03B 37/15** $^{(2006.01)}$
**G02B 6/255** $^{(2006.01)}$   **G02B 23/24** $^{(2006.01)}$

(52) Gemeinsame Patentklassifikation (CPC):
**C03B 23/047; A61C 19/004; C03B 37/15;**
C03B 2203/04; C03B 2203/40; G02B 6/2552;
G02B 23/2469

(86) Internationale Anmeldenummer:
**PCT/EP2020/054894**

(87) Internationale Veröffentlichungsnummer:
**WO 2020/173932 (03.09.2020 Gazette 2020/36)**

### (54) GLAS-LICHTLEITER MIT VARIABLEM QUERSCHNITT

GLASS OPTICAL WAVEGUIDE WITH VARIABLE CROSS SECTION

GUIDE DE LUMIÈRE EN VERRE À SECTION TRANSVERSALE VARIABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.02.2019  DE 102019105183**

(43) Veröffentlichungstag der Anmeldung:
**05.01.2022  Patentblatt 2022/01**

(73) Patentinhaber: **SCHOTT AG**
**55122 Mainz (DE)**

(72) Erfinder:
• **STEIGLEDER, Jan Philipp**
**55257 Budenheim (DE)**
• **SCHULTHEIS, Bernd**
**55270 Schwabenheim (DE)**
• **CRAMER, Martin**
**65187 Wiesbaden (DE)**
• **SCHWEDLER, Christian**
**55130 Mainz (DE)**
• **RUSSERT, Hubertus**
**55270 Jugenheim (DE)**
• **HUNZINGER, Bernhard**
**55263 Wackernheim (DE)**
• **WERNER, Holger**
**60596 Frankfurt am Main (DE)**

(74) Vertreter: **Blumbach · Zinngrebe Patentanwälte PartG mbB**
**Alexandrastraße 5**
**65187 Wiesbaden (DE)**

(56) Entgegenhaltungen:
US-A- 4 820 321       US-A1- 2003 138 753
US-A1- 2013 236 153

EP 3 931 159 B1

## Beschreibung

Die Erfindung betrifft allgemein Lichtleiter. Im Speziellen betrifft die Erfindung Lichtleiter aus Glas mit einem sich entlang der Richtung der Lichtleitung verändernden Querschnitt.

Lichtleiter mit veränderlichem Querschnitt werden unter anderem in der Dentalmedizin eingesetzt. Hier wird Licht beispielsweise dazu eingesetzt, UV-härtende Kunststoffe für Zahnfüllungen zu härten.

Hier besteht die Aufgabe darin, möglichst viel Licht zuzuführen und dabei die Handlichkeit des Werkzeugs beizubehalten. In den letzten Jahren sind lichthärtbare Kunstharze sehr wichtig für Zahnbehandlungen geworden. Diese Kunstharze, die typischerweise mit blauem LED-Licht härtbar sind, werden als Versiegelungen, für den Zahnaufbau und für kieferorthopädische Behandlungen verwendet.

Für Dentalbehandlungen sind Härtungseinrichtungen oder Handstücke heutzutage essentielle Werkzeuge. Viele dieser Geräte nutzen starre Lichtleiter, um Licht von Leuchtdioden zur Spitze des Handstücks oder Werkzeugs zu leiten. Diese Lichtleiter können eine sich zur Spitze hin verjüngen, um ein Maximum an Licht zuzuführen.

Obwohl es Instrumente gibt, die Leuchtdioden direkt am Abstrahlungsort verwenden, um die Kunstharze zu härten, sind Handstücke mit Lichtleitern verbreitet, da diese einfacher zu sterilisieren sind. Dies, da die Glasstange einfach ausgebaut und autoklaviert und/oder gereinigt werden kann. Dies ermöglicht es, die Hygienestandards für die verwendeten Instrumente einfacher einzuhalten. Auch können die Lichtleiter gebogen sein, um alle Orte der Mundhöhle erreichen zu können. Derartige Geräte werden oft bevorzugt wegen der Möglichkeit, bei gebogenem Lichtleiter diesen zu drehen, um mit der Abstrahlung in verschiedenen Winkeln die Handhabbarkeit zu verbessern. Dies ist wichtig, da eine gründliche Härtung eine umfassende, lückenlose Bestrahlung mit dem Licht voraussetzt.

Härtungsinstrumente sollten so viel Licht wie möglich am Zahn bereitstellen, um die Behandlungszeiten kurz zu halten. Dies bedeutet, dass trotz der für den Patienten unkomfortablen Abmessungen große Lichtleiter notwendig waren, um die erforderliche Lichtintensität bereitzustellen.

Um Lichtleiter mit einer Verjüngung aus Glas herzustellen, wird ein Glasstab bisher in der Mitte erwärmt, bis das Glas erweicht und dann auseinandergezogen, so dass sich an der eine Taille bildet. Der Glasstab kann dann in der Mitte der Taille aufgetrennt werden, so dass zwei sich endseitig verjüngende Lichtleiter erhalten werden. Ein solches Verfahren wird in der US 6658896 B2 offenbart. Die US 7305166 B1 beschreibt ein Verfahren zur Herstellung von GRIN-Lichtleitern, bei dem ein Lichtleiter durch Erhitzen und Strecken mit einer Taille versehen wird. Ein sich in einer Taille verjüngender photonischer Lichtleiter wird weiterhin in der US 2007/201802 A1 beschrieben. Die US 4,820,321 betrifft ein Verfahren und eine Vorrichtung zur Herstellung zylindrisch endender, optischer Faserkonusse mit einer Erweiterungsoptik, die einen langen Abschnitt einer optischen Standardfaser mit gleichförmigem Durchmesser aufweist, der sich allmählich über einen konischen Abschnitt in einen zylindrischen Abstand größerer Abmessungen erweitert.

Die US 2003/0138753 A1 beschreibt ein Verfahren zur Herstellung eines faseroptischen Lichtleiters, insbesondere einer zahnärztlichen Lichtsonde, mit einem gebogenen distalen Ende mit einer sich verjüngenden Spitze. Das Verfahren umfasst den Schritt des Erhitzens mittels einer Hochtemperaturflamme nur des Mittelabschnitts eines vertikal angeordneten, massiven, zylindrischen, verschmolzenen Glasfaserstabs, wobei sich der Mittelabschnitt unter seinem eigenen Gewicht durch die Schwerkraft ausdehnt und verdünnt. Die US 2013/0236153 A1 offenbart eine optische Faser, insbesondere für den Telekommunikationsbereich, mit verschiedenen Fasergeometrien, insbesondere einen Hybridkonus, bei dem zusätzliche Elemente, wie Beschichtungen, bei der Herstellung eingesetzt werden, so dass die hergestellten Hybidkonusse mechanisch robust und handhabbarer sind.

Der Erfindung liegt nun die Aufgabe zugrunde, sich verjüngende, beziehungsweise je nach Richtung des Licht sich erweiternde Lichtleiter bereitzustellen, die in Bezug auf die Handhabbarkeit verbessert sind. Diese Aufgabe wird durch den Gegenstand der unabhängigen Ansprüche gelöst. Vorteilhafte Weiterbildungen sind in den jeweiligen abhängigen Ansprüchen angegeben. Demnach ist ein gezogenes Glaselement zur Herstellung von vorzugsweise lichtkonzentrierenden Glas-Lichtleitern vorgesehen, welches zwei erste Längenabschnitte umfasst, die jeweils eine erste Querschnittfläche aufweisen und die beiden Enden des Glaselements bilden. Außerdem weist das Glaselement einen zwischen den ersten Längenabschnitten liegenden zweiten, mittleren Längenabschnitt mit einer zweiten Querschnittfläche auf, die kleiner ist als die erste Querschnittfläche der ersten Längenabschnitte, sowie zwei Übergangsabschnitte jeweils zwischen dem mittleren Längenabschnitt und den endseitigen Längenabschnitten. Die Querschnittfläche des Glaselements ändert sich entlang der Übergangsabschnitte kontinuierlich und geht von der ersten Querschnittfläche in die zweite Querschnittfläche über. In einer bevorzugten Ausführungsform sind die ersten Längenabschnitte endseitig angeordnet. Das Glaselement hat damit also eine hantelförmige Gestalt.

Der zweite, mittlere Längenabschnitt weist in bevorzugter Ausführungsform eine Länge von mindestens dem dreifachen der Wurzel der zweiten Querschnittfläche auf. Gemäß einer besonders bevorzugten Ausführungsform ist der mittlere Längenabschnitt mindestens so lang, wie die addierte Länge der Übergangsabschnitte.

Innerhalb des mittleren Längenabschnitts bleibt der Querschnitt insbesondere konstant, ebenso wie in den endseitigen Längenabschnitten. Der mittlere Längenabschnitt kann dann definiert werden, als der Längenabschnitt, innerhalb dem die Querschnittfläche mindestens um einen Faktor 1,025 größer als die zweite Querschnittfläche und mindestens um einen Faktor 1,025 kleiner als die erste Querschnittfläche ist. Im Folgenden wird der zwischen den ersten Längeabschnitten angeordnete zweite Längenabschnitt als mittlerer Längenabschnitt bezeichnet. Da sich an den mittleren Längenabschnitt auch die Übergangsabschnitte mit sich änderndem Querschnitt anschließen, ist der mittlere Längenabschnitt auch zwischen den Übergangsabschnitten angeordnet.

Bevorzugt ist die erste Querschnittfläche weiterhin mindestens um einen Faktor 1,1 größer als die zweite Querschnittfläche, um eine deutliche Konzentration oder Zerstreuung der Lichtintensität, je nach Richtung der Lichtleitung, zu erreichen.

Das hantelförmige Glaselement kann dann am mittleren Längenabschnitt aufgetrennt werden. Auf diese Weise wird ein gezogener Glas-Lichtleiter erhalten. Im Allgemeinen können beide durch das Auftrennen erhaltenen Teile als solche sich verjüngende Glas-Lichtleiter verwendet werden. Demgemäß ist in einem weiteren Aspekt gemäß Anspruch 7 ein gezogener Glas-Lichtleiter, hergestellt durch Auftrennung des hantelförmigen Glaselements am mittleren Längenabschnitt vorgesehen, umfassend

- einen ersten Längenabschnitt, der an einer ersten Stirnfläche des Lichtleiters zur Lichteinkopplung oder Lichtauskopplung endet, wobei der erste Längenabschnitt eine erste Querschnittfläche aufweist, und
- einen zweiten Längenabschnitt mit einer zweiten Querschnittfläche, der in einer zweiten Stirnfläche zur Lichteinkopplung oder Lichtauskopplung endet, so dass Licht im Lichtleiter an einer der Stirnflächen eingekoppelt und an der anderen Stirnfläche ausgekoppelt werden kann, wobei die Querschnittfläche des ersten Längenabschnitts größer, vorzugsweise mindestens um einen Faktor 1,1 größer ist, als die Querschnittfläche des zweiten Längenabschnitts, und wobei
- sich die Querschnittfläche in einem Übergangsabschnitt zwischen dem ersten Längenabschnitt und dem zweiten Längenabschnitt kontinuierlich ändert, derart, dass sich der Übergangsabschnitt vom ersten Längenabschnitt zum zweiten Längenabschnitt hin verjüngt. Die Länge des zweiten Längenabschnitt beträgt dann vorzugsweise mindestens das 1,5-fache, vorzugsweise mindestens das Dreifache der Wurzel der zweiten Querschnittfläche.

Das hantelförmige Glaselement und auch der daraus abgeteilte Glas-Lichtleiter können mit einem Verfahren gemäß Anspruch 12 hergestellt werden, bei welchem

- ein Glasstab bereitgestellt und mit zwei Halterungen gehaltert wird, wobei die Halterungen den Glasstab an zwei in Längsrichtung des Glasstabs beabstandeten Bereichen halten, und
- mit einer Heizeinrichtung ein ringförmiger Bereich der Oberfläche beleuchtet und damit ein Längsabschnitt des Glasstabs so weit erwärmt wird, bis dieser erweicht,
- der Glasstab dann an den Halterungen auseinandergezogen wird, so dass sich der Glasstab an dem erweichten Längsabschnitt verjüngt, und wobei der ringförmige Bereich und der Glasstab relativ zueinander entlang der Längsrichtung des Glasstabs bewegt werden, wobei beim Auseinanderziehen und Bewegen des ringförmigen Bereichs ein vorgegebenes Geschwindigkeitsprofil der Relativbewegung und ein vorgegebenes Geschwindigkeitsprofil der Geschwindigkeit des Auseinanderziehens des Glasstabs eingestellt werden, wobei die beiden Geschwindigkeitsprofile miteinander gekoppelt sind, so dass zwischen zwei endseitigen Längenabschnitten ein mittlerer Längenabschnitt mit einer gegenüber der ersten Querschnittfläche der endseitigen Längenabschnitte verringerten, vorzugsweise um mindestens einen Faktor 1,2 verringerten zweiten Querschnittfläche gezogen wird, der an Übergangsabschnitten in die endseitigen Längenabschnitte mit sich stetig vergrößerndem Querschnitt übergeht.

Als Heizeinrichtungen können Strahlungsquellen, sowie Brenner oder induktive Heizungen verwendet werden. Besonders geeignet als Heizeinrichtung ist eine Lichtquelle. Als Strahlung, beziehungsweise Licht zum Aufheizen wird Infrarotlicht mit einer Wellenlänge von mindestens 1 $\mu$m, insbesondere mit einer Wellenlänge von mindestens 5 $\mu$m.

Licht zum Aufheizen des Glasstabs kann dabei insbesondere auch Infrarotlicht umfassen. Eine besonders geeignete und bevorzugte Lichtquelle ist ein Laser. Mit einer solchen Lichtquelle kann örtlich genau begrenzt Licht zur Aufheizung des Glasstabs eingestrahlt werden. Als Laser bietet sich insbesondere ein $CO_2$-Laser an. Dieser kann Licht mit einer Wellenlänge von 5,5 $\mu$m und/oder einer Wellenlänge von 10,6 $\mu$m emittieren, welches schnell und vollständig im Glas absorbiert wird. Weitere geeignete Laser sind Nd:YAG-Laser mit einer Laserwellenlänge von ca. 1064 $\mu$m, Ho:YAG-Laser oder Tm:YAG-Laser mit Laserwellenlängen im Bereich von ca. 1,9 $\mu$m bis 2,1 $\mu$m, Er:YAG-Laser mit einer Laserwellenlänge von etwa 2,94 $\mu$m. Es können weiterhin auch zwei oder mehr gleich- oder verschiedenartige Heizeinrichtungen miteinander kombiniert werden. Beispielsweise könnte eine großflächigere Vorheizung mit einer Infrarot-Leuchte und eine gezielte lokale weitere Aufheizung mit einem Laser erfolgen. Es können weiterhin auch zeitlich und/oder örtlich variable Heizprofile angewendet werden, die gegebenenfalls auch unterschiedliche Energiedichten aufweisen. Beispielsweise kann die oben genannte Vorheizung mit einer niedrigeren Energiedichte erfolgen und aufgrund des intensiven Laserstrahls eine lokal auf dem ringförmigen Bereich sehr hohe Energiedichte eingebracht werden.

Der ringförmige Bereich muss nicht ständig über den gesamten Umfang beleuchtet werden. Vielmehr ist es auch möglich, das Licht auf einen Teilbereich des Umfangs einzustrahlen und den Glasstab zu drehen, so dass vom Lichtstrahl die Oberfläche des ringförmigen Bereichs abgetastet wird, beziehungsweise, so dass der Lichtstrahl ringförmig über die Oberfläche wandert. Allgemein ist daher in einer Weiterbildung vorgesehen, dass der Glasstab während der Bestrahlung mit der Lichtquelle um seine Längsachse rotiert wird.

Gemäß einer Ausführungsform ist der Lichtleiter ein einfacher Kern-Mantel-Lichtleiter, bei dem ein Kern aus einem ersten Glas von einem Mantel eines zweiten Glases umgeben ist, welches einen geringeren Brechungsindex als das erste Glas aufweist, so dass Licht im Kern geleitet werden kann. Denkbar ist auch ein mantelloser Leiter. Gemäß noch einer Ausführungsform umfasst der Lichtleiter mehrere Kerne. Dieses können jeweils von einem eigenen Mantel umgeben oder in einen gemeinsamen Mantel eingebettet sein.

Die Erfindung wird nachfolgend anhand der beigeschlossenen Zeichnungen näher erläutert. In den Zeichnungen bezeichnen gleiche Bezugszeichen jeweils gleiche oder entsprechende Elemente.

Kurzbeschreibung der Figuren

Fig. 1 zeigt ein hantelförmiges Glaselement in Seitenansicht.
Fig. 2 zeigt einen Glas-Lichtleiter.
Fig. 3 und Fig. 4 sind Querschnittansichten eines Glaselements oder Glas-Lichtleiters.
Fig. 5 zeigt einen errechneten und einen gemessenen Verlauf des Querschnitts eines Lichtleiters.
Fig. 6 zeigt Ableitungen der Verläufe aus Fig. 5.
Fig. 7 zeigt ein Diagramm des Verlaufs der Querschnittfläche eines mit einem herkömmlichen Ziehverfahren hergestellten hantelförmigen Glaselements
Fig. 8 eine Ableitung des Verlaufs aus Fig. 7 im Vergleich zu einer errechneten Kurve.
Fig. 9 zeigt die übereinandergelegten Querschnittflächen in axialer Richtung des Glaselements oder Lichtleiters gesehen.
Fig. 10 zeigt eine Ausführungsform einer Lichtquelle mit einem gebogenen Längenabschnitt.
Fig. 11 zeigt eine Vorrichtung zur Herstellung eines hantelförmigen Glaselements.
Fig. 12 zeigt eine Variante des Glaselements aus Fig. 1 mit einer abschnittweise durch Heißpressen geänderten Querschnittform.
Fig. 13 zeigt einen aus dem Glaselement nach Fig. 12 hergestellten Lichtleiter.
Fig. 14 zeigt verschiedene Querschnittformen der Stirnfläche eines Lichtleiters.
Fig. 15 zeigt ein Glaselement mit zwei mittleren Abschnitten mit reduzierter Querschnittfläche.

Ausführliche Beschreibung der Erfindung

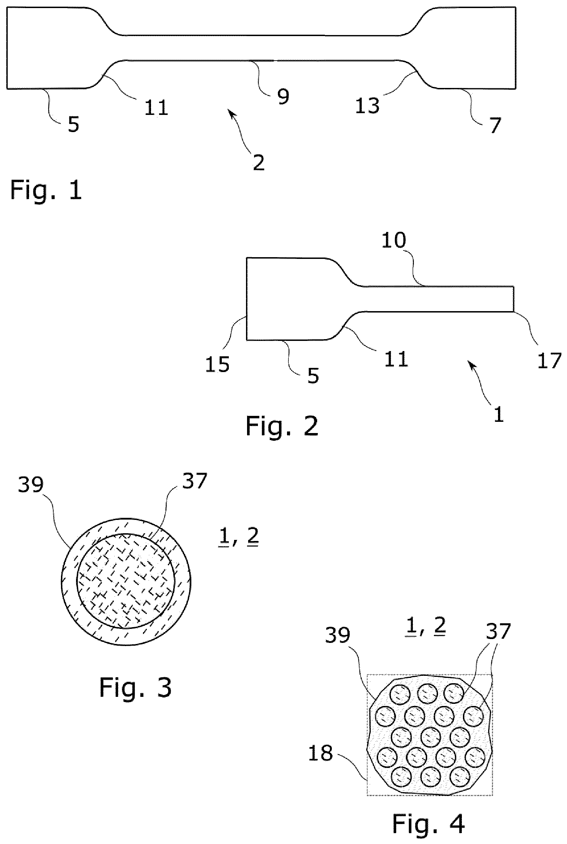

Fig. 1 zeigt ein hantelförmiges Glaselement 2 für die Herstellung eines sich verjüngenden Glas-Lichtleiters. Das Glaselement 2 wird durch Ziehen hergestellt. Die Form des Glaselements erfolgt also durch Heißformung. Ohne Beschränkung auf das spezielle dargestellte Beispiel hat ein hantelförmiges Glaselement 2 gemäß dieser Offenbarung daher insbesondere auch eine feuerpolierte Oberfläche. Die Enden des Glaselements 2 werden durch zwei Längenabschnitte 5, 7 gebildet. Zwischen diesen endseitigen Längenabschnitten 5, 7 befindet sich ein mittlerer Längenabschnitt 9. Dieser unterscheidet sich im Querschnitt, bei einem runden Glaselement 2 demgemäß auch im Durchmesser von den endseitigen Längenabschnitten 5, 7. Dabei ist die Querschnittfläche der endseitigen Längenabschnitte 5, 7 größer als die Querschnittfläche des mittleren Längenabschnitts 9. Die erste Querschnittfläche der endseitigen Längenabschnitte 5, 7, und die zweite Querschnittfläche des mittleren Längenabschnitts 9 bleiben entlang der jeweiligen Abschnitte im Wesentlichen gleich. Die Längenabschnitte 5, 7, 9 haben demzufolge eine im mathematischen Sinne allgemein prismatische, im Spezialfall eines kreisförmigen Querschnitts eine zylindrische Form. Die Querschnittflächen des mittleren und der endseitigen Längenabschnitte 9, 5, 7 unterscheiden sich dabei um mindestens einen Faktor 1,2. Demgemäß gilt zwischen der ersten Querschnittfläche Q1 und der zweiten Querschnittfläche Q2 allgemein die Beziehung $Q1 \geq 1,1 \cdot Q2$. Ohne Beschränkung auf das dargestellte Beispiel ist dabei gemäß einer bevorzugten Ausführungsform vorgesehen, dass für die Querschnittflächen gilt, dass das Verhältnis Q1/Q2 in einem Bereich von 1,1 bis 100 liegt. Bezogen auf den Durchmesser bei hantelförmigen Glaselementen und den daraus hergestellten Lichtleitern liegt das Verhältnis D1/D2 des Durchmessers D1 der endseitigen Längenabschnitte 5, 7 zum Durchmesser D2 des mittleren Längenabschnitts 9, beziehungsweise des zweiten Längenabschnitts des Lichtleiters im Bereich von 1,1 bis 10.

Auch wenn der Querschnitt des Glaselements 1 nicht kreisförmig ist, kann dem Querschnitt ein Durchmesser zugeordnet werden. Ein solcher Durchmesser kann einfach als Durchmesser einer Kreisfläche angegeben werden, die gleich groß wie die Querschnittfläche ist. Bei einem Glaselement mit quadratischem Querschnitt mit Seitenlänge a des Quadrats ergäbe sich ein zugeordneter Durchmesser

$$D = \sqrt{\frac{4a^2}{\pi}} \,.$$

Außerdem ist vorgesehen, dass der mittlere verjüngte Bereich des hantelförmigen Glaselements 2, also der mittlere Längenabschnitt 9 eine gewisse Länge mit gleichbleibendem Querschnitt aufweist. Insbesondere hat der mittlere Längenabschnitt 9 eine Länge, die mindestens dreimal so lang ist, wie der Längenwert, welcher der Quadratwurzel der zweiten Querschnittfläche entspricht. Im dargestellten Beispiel ist der mittlere Längenabschnitt 9 noch deutlich länger. Nimmt man einen kreisförmigen Querschnitt an, so wäre der Längenabschnitt 9 im Beispiel etwa zehnmal so lang wie der Durchmesser. Dies ergäbe hier eine Länge von etwa dem 11-fachen der Wurzel der Querschnittfläche.

Die benachbarten Längenabschnitte gehen in Übergangsabschnitten 11, 13 ineinander über. In den Übergangsabschnitten 11, 13 ändert sich die Querschnittfläche kontinuierlich, wobei diese jeweils vom mittleren Längenabschnitt 9 aus kontinuierlich ansteigt und an den endseitigen Längenabschnitten 5, 7 die erste Querschnittfläche erreicht.

Ohne Beschränkung auf das dargestellte Beispiel ist in Weiterbildung vorgesehen, dass die größte Querabmessung der endseitigen Längenabschnitte 5, 7 kleiner als 50 mm, vorzugsweise kleiner als 30 mm, bevorzugt kleiner als 20 mm, besonders vorzugsweise kleiner als 15 mm beträgt. Bei einem Glaselement 2 mit kreisförmigem Querschnitt entspricht diese größte Querabmessung dem Durchmesser der endseitigen Längenabschnitte 5, 7. Diese Dimensionen sind besonders auch für Handstücke im medizinischen Bereich, vorzugsweise im Dentalbereich geeignet.

Das gezogene hantelförmige Glaselement 2 kann nun am mittleren, verjüngten Längenabschnitt 9 aufgetrennt werden. Das so abgetrennte Teil bildet einen Glas-Lichtleiter 1, wie er in Fig. 2 dargestellt ist. Erfolgt die Auftrennung, wie bevorzugt mittig im mittleren Längenabschnitt, so werden zwei gleichartige Glas-Lichtleiter 1 erhalten. Der Glas-Lichtleiter 1, wie er als Beispiel in Fig. 2 gezeigt ist, weist allgemein einen ersten Längenabschnitt 5 auf, der an einer ersten Stirnfläche 15 endet, sowie einen zweiten Längenabschnitt 10 mit einer zweiten Querschnittfläche auf, der in einer in einer zweiten Stirnfläche 17 endet. Licht, welches an einer der Stirnflächen 15, 17 eingekoppelt wird, wird dann im Glas-Lichtleiter 1 zur anderen Stirnfläche geleitet und tritt dort aus, wobei je nachdem, in welche der Stirnflächen 15, 17 eingekoppelt wird, eine Lichtkonzentration oder Lichtdiffusion erfolgt. Allgemein und besonders bevorzugt wird der Glas-Lichtleiter 1 als lichtkonzentrierender Lichtleiter verwendet. Dazu wird die Stirnfläche 15 als Lichteintrittsfläche verwendet.

Entsprechend der Form des hantelförmigen Glaselements 2 ist die Querschnittfläche des ersten Längenabschnitts 5 mindestens um einen Faktor 1,2 größer, als die Querschnittfläche des zweiten Längenabschnitts 10. Die Querschnittfläche ändert sich im Übergangsabschnitt 11 zwischen dem ersten Längenabschnitt 5 und dem zweiten Längenabschnitt 10 kontinuierlich wobei sich der Übergangsabschnitt vom ersten Längenabschnitt 5 zum zweiten Längenabschnitt (10) hin verjüngt. Der zweite Längenabschnitt 9 weist eine Länge von mindestens dem 1,5-fachen, vorzugsweise mindestens dem dreifachen der Wurzel der zweiten Querschnittfläche auf.

In den Fig. 3 und Fig. 4 sind schematisch Querschnitte von hantelförmigen Glaselementen 2 oder Glas-Lichtleitern 1 dargestellt. Fig. 3 ist ein Beispiel einer Ausführungsform, bei der die Längenabschnitte des hantelförmigen Glaselements 2 oder des daraus hergestellten Lichtleiters 1 einen kreisförmigen Querschnitt aufweisen. Allgemein, ohne Beschränkung auf die dargestellten Beispiele ist in einer bevorzugten Ausführungsform vorgesehen, dass der Lichtleiter 1 oder entsprechend auch das hantelförmige Glaselement 2 einen Mantel 39 und zumindest einen Kern 37 aufweist, der vom Mantel 39 umgeben ist und einen höheren Brechungsindex als der Mantel 39 aufweist, so dass Licht durch Totalreflexion im Kern geleitet werden kann. Bei der in Fig. 3 gezeigten Ausführungsform ist ein einzelner Kern 37 vorgesehen, der vom Mantel 39 umgeben ist. Bei der Ausführungsform nach Fig. 4 sind mehrere Kerne 37 in einem gemeinsamen Mantel 39 geführt. Die Ausführungsform gemäß Fig. 4 kann beispielsweise auch als Bildleiter dienen. Gemäß einer Ausführungsform ist also allgemein ein Glas-Lichtleiter 1 vorgesehen, der mehrere lichtleitende Kerne 37 aufweist, die in einem gemeinsamen Mantel 39 verlaufen. Bei der Ausführungsform nach Fig. 3 weist der Lichtleiter 1, beziehungsweise das hantelförmige Glaselement 2 einen runden Querschnitt auf. Ein solcher Lichtleiter kann einfach aus einem entsprechenden runden Glasstab mit Kern und Mantel gezogen werden. Ein Glasstab mit mehreren Kernen 37, wie er in Fig. 4 gezeigt ist, kann wiederum durch Zusammenschmelzen einer Vielzahl von Kern-Mantel-Vorformen erhalten werden. Durch dieses Zusammenschmelzen mehrerer dünnerer Glasstäbe kann auch der resultierende Glasstab zur Herstellung des Lichtleiters eine Querschnittform aufweisen, die von einem Kreis mehr oder weniger stark abweicht. Eine solche Form zeigt auch das Beispiel der Fig. 4.

Unabhängig von der speziellen Querschnittform ist es aber allgemein bevorzugt, wenn die Querschnitte des mittleren und der endseitigen Längenabschnitte 5, 7, 9 jeweils eine Form aufweisen, deren minimal umgebendes Rechteck ein Seitenverhältnis von maximal 3:1, vorzugsweise maximal 2:1 aufweist. Das minimal umgebende Rechteck 18 des Querschnitts ist in Fig. 4 eingezeichnet. Der Querschnitt ist hier zwar nicht kreisförmig, aber das Seitenverhältnis des minimal umgebenden Rechtecks 18 ist dennoch hier im Wesentlichen quadratisch.

Da der Übergangsabschnitt 11, entlang welchem die Verjüngung des Querschnitts erfolgt, nicht wie bei bisher gezogenen entsprechenden Lichtleitern bis zum dünneren Ende verläuft, sondern das dünnere Ende eine gewisse Strecke mit gleichbleibendem Querschnitt verläuft, erfolgt die Querschnittänderung auf einer vergleichsweise kürzeren Strecke. Um hier Lichtverluste im Bereich der Querschnittänderung zu minimieren, erweist sich ein besonderer Verlauf der Änderung als besonders vorteilhaft. Gemäß der Erfindung in Anspruch 1 ist dazu allgemein ein gezogenes hantelförmiges Glaselement 2, zur Herstellung von Glas-Lichtleitern (1) vorgesehen, umfassend

- zwei endseitige Längenabschnitte 5, 7, welche eine erste Querschnittfläche aufweisen und die beiden Enden des Glaselements 2 bilden,

  sowie zwei Übergangsabschnitte 11, 13 jeweils zwischen den endseitigen Längenabschnitten 5, 7, wobei sich die Querschnittfläche des Glaselements entlang der Übergangsabschnitte 11, 13 kontinuierlich ändert und von der ersten Querschnittfläche in eine zweite, kleinere Querschnittfläche übergeht, und
  bei welchem der Querschnitt A im mittleren Drittel der Übergangsabschnitte 11, 13 langsamer ansteigt, als die Funktion

$$(1) \qquad A(l) = A_2 + (A_1 - A_2) * \left[\frac{1}{2} + \frac{1}{2}\tanh\left(6\frac{l-l_0}{l_u}\right)\right],$$

wobei l die Längenkoordinate, $A_1$ die erste und $A_2$ die zweite Querschnittfläche, $l_u$ die Länge des jeweiligen Übergangsabschnitts 11, 13 und $l_0$ die Längenkoordinate der Mitte des Übergangsabschnitts 11, 13 bezeichnen.

Auch bei dieser Ausführungsform ist vorzugsweise ein mittlerer Längenabschnitt 9 zwischen den beiden Übergangsabschnitten vorgesehen. Es ist aber auch möglich, dass die beiden Übergangsabschnitte 12, 13 direkt, insbesondere dort, wo die minimale zweite Querschnittfläche erreicht ist, ineinander übergehen.

Im Allgemeinen ist die Querschnittänderung am Übergangsabschnitt eines hantelförmigen Glaselements 2, beziehungsweise des daraus durch Auftrennen hergestellten Glas-Lichtleiters 1 noch geringer, als durch die Gleichung (1) gegeben.

Gemäß einer bevorzugten Weiterbildung ist daher vorgesehen, dass der Querschnitt A im mittleren Drittel der Übergangsabschnitte 11, 13 langsamer ansteigt, als die Funktion

$$(2) \qquad A(l) = 0{,}95 * (A_1 - A_2) * \left[\frac{1}{2} + \frac{1}{2}\tanh\left(6\frac{l-l_0}{l_u}\right)\right],$$

wobei wie bei Gleichung (1) l die Längenkoordinate, $A_1$ die erste und $A_2$ die zweite Querschnittfläche, $l_u$ die Länge des jeweiligen Übergangsabschnitts 11, 13 und $l_0$ die Längenkoordinate der Mitte des Übergangsabschnitts 11, 13 bezeichnen.

Gemäß noch einer alternativen oder zusätzlichen Ausführungsform ist vorgesehen, dass das Maximum der Änderung des Querschnitts pro Längeneinheit, dA(l)/dl, in einem Übergangsabschnitt 11, 13 größer ist als $(A_1-A_2)/l_u$ und kleiner ist als $3\cdot(A_1-A_2)/l_u$, vorzugsweise kleiner als $2{,}41\cdot(A_1-A_2)/l_u$.

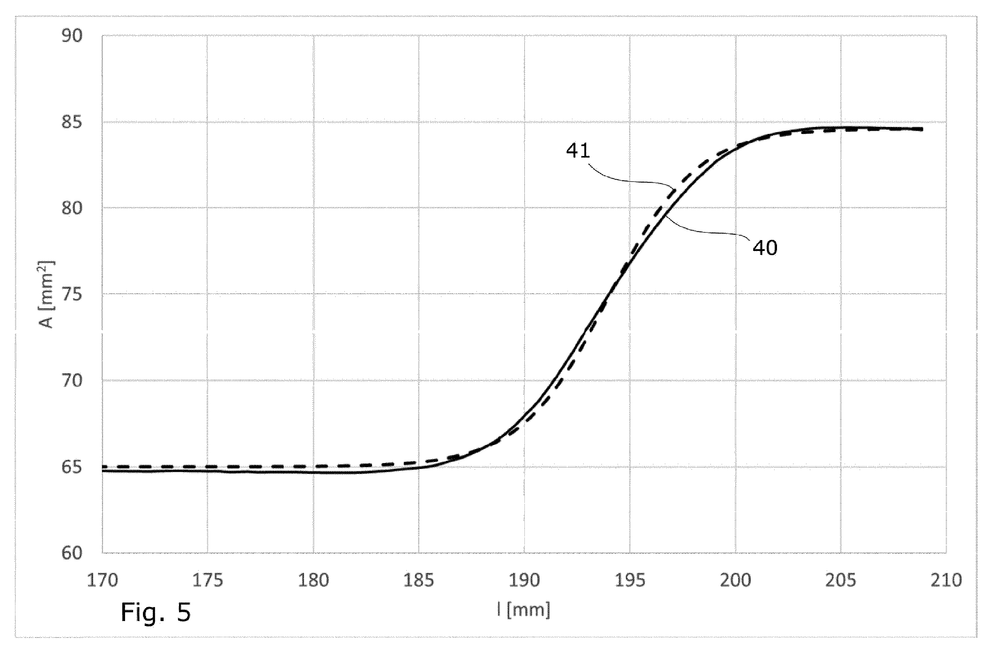

Fig. 5 zeigt dazu einen Vergleich der Verlauf des Querschnitts im Bereich des Übergangsabschnitts 11 mit einem Verlauf gemäß der oben angegebenen Kurve. Die Kurve 40 in Fig. 5 ist dabei aus Meßwerten gebildet, während die Kurve 41 den Verlauf A(l) gemäß der oben angegebenen Gleichung wiedergibt. Der Übergangsabschnitt 11 erstreckt sich bei dem dargestellten Beispiel etwa zwischen den Längenwerten 185 mm und 205 mm, hat also eine Länge von etwa 20 mm. Wie ersichtlich ist der Übergangsabschnitt so geformt, dass die Querschnittänderung besonders in der Mitte des Übergangsabschnittes geringer ist, als bei Kurve 41. Damit geht auch eine maximale Steigung des Verlaufs, also eine maximale Änderung des Querschnitts einher, die geringer ist als $3\cdot(A_1-A_2)/l_u$, insbesondere kleiner ist als $2{,}4\cdot(A_1-A_2)/l_u$. Eine solche Maximalsteigung wird durch den Verlauf nach Gleichung (1) erreicht. Die Steigung ist allerdings auch größer als $(A_1-A_2)/l_u$. Eine solche Änderung würde dann erreicht, wenn die Querschnittänderung über den gesamten Übergangsabschnitt linear wäre. Ein solcher Verlauf wäre mit einer Formgebung durch Ziehen aber nur dann annähernd in einfacher Weise erreichbar, wenn der Übergangsabschnitt sehr lang gewählt wird.

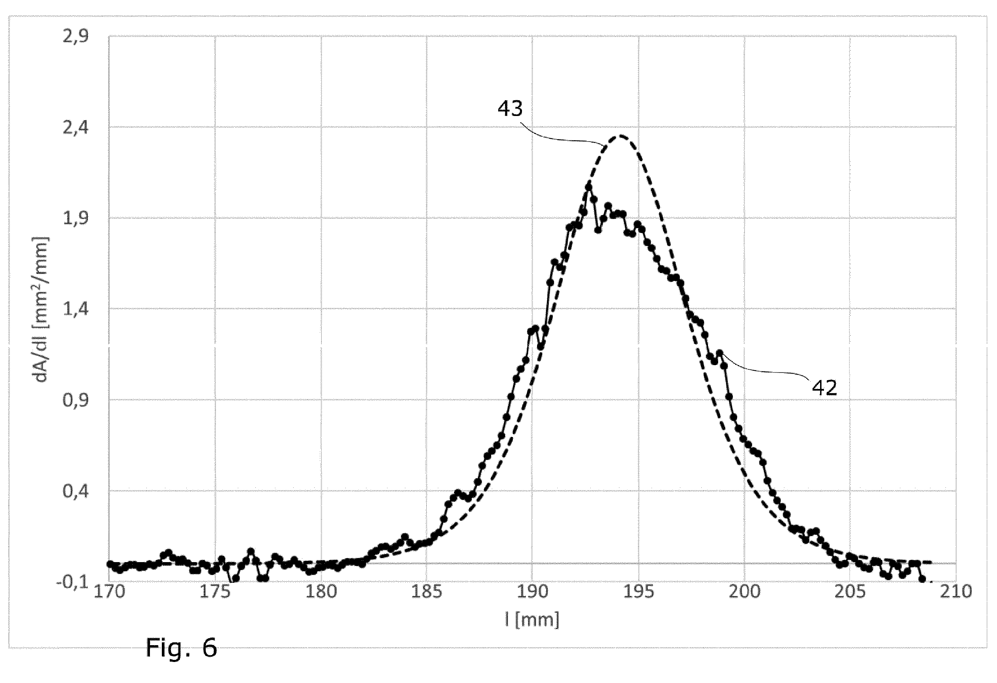

Der Unterschied zu einer idealisierten Tangenshyperbolicus-Funktion wird auch an der Ableitung der in Fig. 5 gezeigten Verläufe besonders deutlich. Die Ableitungen dA/dl der Verläufe sind in Fig. 6 gezeigt. Die Kurve 42 ist dabei die Ableitung des gemessenen Verlaufs des Querschnitts A nach der Längenkoordinate l, dA/dl. Die Kurve 43 ist entsprechend die Ableitung der Funktion (1). Aus dem Vergleich ist ersichtlich, dass die maximale Änderung des Querschnitts eines Lichtleiters gemäß dieser Offenbarung kleiner ist, als die maximale Änderung der Funktion (1). Diese geringere maximale Änderung erhöht die Effizienz bei der Konzentration des Lichts, da im Übergangsbereich an den steilsten Stellen weniger Licht herausgestreut wird.

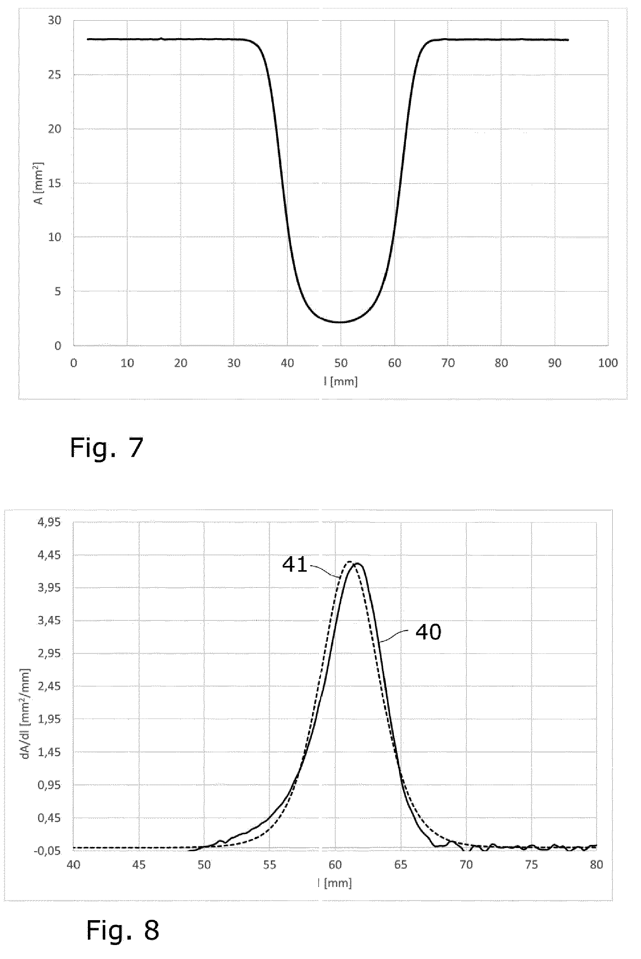

Fig. 7 zeigt zum Vergleich zu Fig. 5 ein Diagramm des Verlaufs der Querschnittfläche eines mit einem herkömmlichen Ziehverfahren hergestellten hantelförmigen Glaselements 2. Das Glaselement wird in bisher üblicher Weise durch mittige Erwärmung des gesamten umzuformenden Bereichs und Auseinanderziehen hergestellt. Dadurch gibt es im Unterschied zu den Beispielen der Fig. 1 und Fig. 5 keinen mittleren Längenabschnitt 9 mit einem gleichbleibenden Querschnitt.

Fig. 8 zeigt die Ableitung des Verlaufs im Bereich der Längenposition mit der minimalen Querschnittfläche bei etwa 50 mm bis in den Längenbereich, bei dem das Glaselement endseitig einen gleichbleibenden Querschnitt aufweist. Ebenfalls eingezeichnet ist die Ableitung der Funktion nach Gleichung (1). Wie ersichtlich folgt der Kurvenverlauf hier sehr genau der Ableitung. Insbesondere stimmen auch die Maximalwerte der Ableitungen sehr genau überein. Demgegenüber ist die maximale Querschnittänderung eines Glaselements 2 gemäß dieser Offenbarung und entsprechend auch einem daraus hergestellten Lichtleiter 1 bei gegebener Länge des Übergangsabschnitts geringer.

Allgemein, ohne Beschränkung auf die dargestellten Beispiele ist in einer Ausführungsform vorgesehen, dass die mittlere Änderung der Querschnittfläche A pro Längeneinheit l, dA/dl im jeweiligen Übergangsbereich 11, 13 im Bereich von $8 \cdot 10^{-5}$ mm²/mm bis $7 \cdot 10^{3}$ mm²/mm liegt. Bei einem runden Querschnitt, oder Allgemein, da dem Querschnitt wie oben gezeigt, ein Durchmesser zugeordnet werden kann, liegt die mittlere Änderung des Durchmessers im jeweiligen Übergangsbereich 5, 7 gemittelt über die Länge des Übergangsbereichs 11, 13 im Bereich von 0,01 bis 30. Diese Parameter gelten für einen aus dem Glaselement 2 herausgetrennten Lichtleiter natürlich entsprechend.

In der nachfolgenden Tabelle sind Ausführungsbeispiele für die Abmessungen der verschiedenen Abschnitte angegeben:

| D1/m m | D2/m m | D1-D2 | D1/D2 | A1/mm² | A2/mm² | A1/A2 | Übergangslänge/mm | dD/dl |
|---|---|---|---|---|---|---|---|---|
| 20,0 | 8,0 | 12,0 | 2,5 | 314,0 | 50,2 | 6,3 | 5 | 2,40 |
| 20,0 | 9,0 | 11,0 | 2,2 | 314,0 | 63,6 | 4,9 | 250 | 0,04 |
| 20,0 | 4,0 | 16,0 | 5,0 | 314,0 | 12,6 | 25,0 | 10 | 1,60 |
| 19,0 | 10,0 | 9,0 | 1,9 | 283,4 | 78,5 | 3,6 | 10 | 0,90 |
| 19,0 | 10 | 9,0 | 1,9 | 283,4 | 78,5 | 3,6 | 40 | 0,23 |
| 18,0 | 2,0 | 16,0 | 9,0 | 254,3 | 3,1 | 81,0 | 20 | 0,80 |
| 15,0 | 8,0 | 7,0 | 1,9 | 176,6 | 50,2 | 3,5 | 10 | 0,70 |
| 13,0 | 8,0 | 5,0 | 1,6 | 132,7 | 50,2 | 2,6 | 8 | 0,63 |
| 13,0 | 6,0 | 7,0 | 2,2 | 132,7 | 28,3 | 4,7 | 10 | 0,70 |
| 13,0 | 8,0 | 5,0 | 1,6 | 132,7 | 50,2 | 2,6 | 25 | 0,20 |
| 11,0 | 6,0 | 5,0 | 1,8 | 95,0 | 28,3 | 3,4 | 8 | 0,63 |
| 10,5 | 9,0 | 1,5 | 1,2 | 86,5 | 63,6 | 1,4 | 5 | 0,30 |
| 10,5 | 8,0 | 2,5 | 1,3 | 86,5 | 50,2 | 1,7 | 6 | 0,42 |
| 10,0 | 8,0 | 2,0 | 1,3 | 78,5 | 50,2 | 1,6 | 5 | 0,40 |
| 6,0 | 2,0 | 4,0 | 3,0 | 28,3 | 3,1 | 9,0 | 6 | 0,67 |
| 6,0 | 1,0 | 5,0 | 6,0 | 28,3 | 0,8 | 36,0 | 8 | 0,63 |

In dieser Tabelle bezeichnen D1 den Durchmesser und A1 die Querschnittfläche der Längenabschnitte 5, 7, D2 den Durchmesser und A2 die Querschnittfläche des mittleren Längenabschnitts 9, beziehungsweise des zweiten Längenabschnitts 10 des Lichtleiters. Die Übergangslänge ist die Länge des Übergangsabschnitts 11 oder 12. D1-D2 ist die Differenz und D1/D2 das Verhältnis der Durchmesser D1 und D2. A1/A2 ist das Verhältnis des Querschnittflächen A1 und A2. Die letzte Spalte listet die mittlere Änderung des Durchmessers dD pro Längeneinheit l im Übergangsabschnitt 11, 12 auf. Bei den Ausführungsbeispielen liegt das Verhältnis der Durchmesser D1/D2 innerhalb des Bereichs von 1,1 bis 10. Die mittlere Änderung des Durchmessers pro Längeneinheit liegt weiterhin im Bereich von 0,01 bis 30. Besonders bevorzugt und ohne Beschränkung auf die Beispiele in der Tabelle ist die mittlere Änderung des Durchmessers pro Längeneinheit bei höchstens 3. Vorzugsweise liegt die mittlere Änderung des Durchmessers pro Längeneinheit damit im Bereich von 0,01 bis 3.

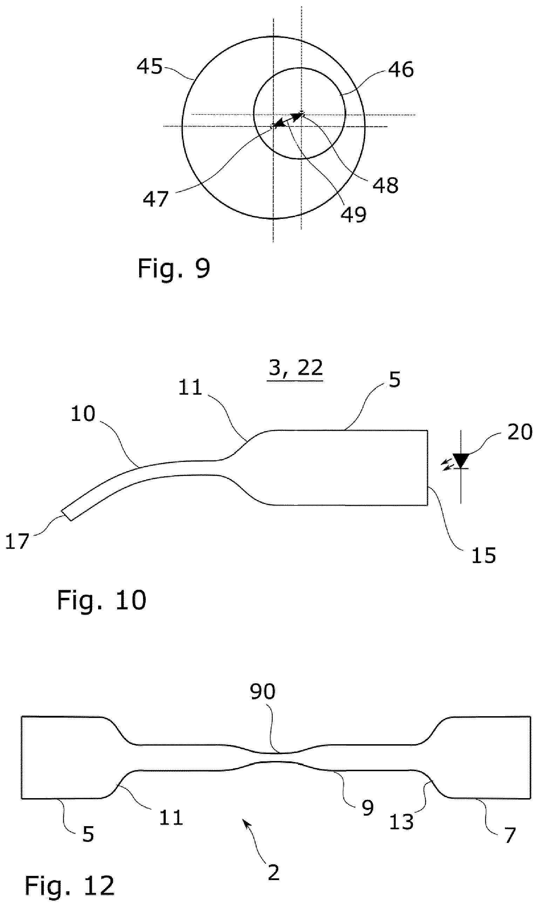

Mit dem Verfahren gemäß dieser Offenbarung kann ein hantelförmiges Glaselement 2, beziehungsweise ein Lichtleiter 1 auch mit einem nur geringen, idealerweise verschwindendem radialen Versatz der Längsabschnitte gefertigt werden. In einer Ausführungsform ist daher vorgesehen, dass der mittlere Längenabschnitt konzentrisch zu mindestens einem der endseitigen Längenabschnitte 5, 7 angeordnet ist, so dass die Distanz der Mittelpunkte der Querschnitte in Längsrichtung, beziehungsweise in axialer Richtung gesehen kleiner als die halbe kleinste Querabmessung des Querschnitts des mittleren Abschnitts 9 ist. Bei einem durch Auftrennen des hantelförmigen Glaselements 2 hergestellten Lichtleiter gilt diese Bedingung dann entsprechend für die Querschnitte des ersten und des zweiten Längenabschnitt 5, 10. Fig. 9 zeigt die Querschnittflächen 45 und 46 der Längenabschnitte 5 und 9 in axialer Richtung betrachtet. Die Querschnittflächen 45, 46, weisen hier einen Versatz auf, so dass die Mittelpunkte 47, 48 der Querschnittflächen 45, 46 in axialer Richtung gesehen nicht übereinanderliegen. Zwischen den Mittelpunkten 47, 48 ergibt sich demnach ein Abstand 49 in radialer Richtung. Dieser Versatz ist aber, wie oben ausgeführt, kleiner als die kleinste Querabmessung der Querschnittfläche 46. Dadurch liegt der Mittelpunkt 47 der Querschnittfläche 45 in Längsrichtung betrachtet immer innerhalb der kleineren Querschnittfläche 46 des mittleren Längenabschnitts 9 (im Falle des Lichtleiters innerhalb der Querschnittfläche 46 des zweiten Längenabschnitts 10). Dieser geringe, im Idealfall verschwindende Versatz ist ebenfalls günstig für die optische Effizienz bei der Konzentration des Lichts am jeweiligen Übergangsabschnitt 11, 13.

Gemäß einer weiteren Ausführungsform eines Lichtleiters kann der zweite Längenabschnitt 10 auch gekrümmt sein. Ein Beispiel einer solchen Ausführungsform zeigt Fig. 10. Ungeachtet der Krümmung bleibt der Querschnitt im zweiten Abschnitt 10 konstant. Eine solche Krümmung ist beispielsweise für bestimmte Handstücke für die Handhabung von Vorteil, etwa wenn die vorderen Innenseiten der Kiefer der Mundhöhle mit dem Handstück beleuchtet werden sollen. Weiterhin stellt Fig. 10 allgemein eine Lichtquelle 3 dar. Diese umfasst einen gezogenen Glas-Lichtleiter 1 gemäß dieser Offenbarung, sowie mindestens einem Lichtemitter 20 der so angeordnet ist, dass dessen Licht über die Stirnfläche 15 am ersten Längenabschnitt 5 in den Lichtleiter 1 eingekoppelt wird und nach Durchlaufen des Lichtleiters an der anderen Stirnfläche 17 am zweiten Längenabschnitt 10 wieder austritt. Selbstverständlich kann die Lichtquelle 3 anstelle des gebogenen Lichtleiters auch allgemein mit einem geraden Lichtleiter 1, wie er etwa die Fig. 2 zeigt, ausgestattet sein. Als Lichtemitter 20 dient bevorzugt, wie gezeigt eine Leuchtdiode. Insbesondere können auch mehrere Leuchtdioden vorgesehen sein, die gemeinsam die Stirnfläche 15 beleuchten. Durch die Verjüngung des Lichtleiters 1 von der Lichteintrittsfläche 15 zur Lichtaustrittsfläche 17 tritt eine Lichtkonzentration, beziehungsweise eine Erhöhung der räumlichen Strahlungsintensität am Lichtaustrittsende, also an der Stirnfläche 17 auf. Wie gesagt, kann eine solche Lichtquelle 3 Bestandteil eines Dental-Handstücks 22 sein.

Weitere Verwendungen einer solchen Lichtquelle 3 sind das Aushärten von Kunststoffen, und/oder in einem Gerät zum Erkennen von Zelltypen, insbesondere Krebszellen, für Anwendungen im Bereich der Dentalmedizin, insbesondere in einem Dental-Aushärtegerät, in einem Gerät zum Erkennen von Karies, in dentalen Handstücken und/oder in dentalen Winkelstücken, in chirurgischen Geräten und/oder in diagnostischen Geräten, insbesondere in Hautanalyse-Geräten, Otoskopen und/oder Endoskopen, für eine lichtinduzierte Behandlung von Entzündungen im Hals-/Rachenraum (Mukositis), Augenheilkunde (Ophthalmie) sowie Dermatologie

Vorteilhafte Verwendungen ergeben sich auch bei der der industriellen Kleberaushärtung mittels UV-Licht oder beim Einsatz in einem Inspektionssystem zur Überwachung von Anlagen oder Maschinen vor. Auch in der Analytik, bspw. der Überwachung oder Prüfung flüssiger Stoffe, können damit einfache bildgebende, lichtleiterbasierte Überwachungsinstrumente insbesondere für temperatur-, feuchte- und/ oder schmutzbelastende Umgebungen realisiert werden.

Somit ist auch eine Verwendung der Lichtquelle 3 mit einem gezogenen Glas-Lichtleiter 1 für ein Inspektionssystem zur Überwachung von Anlagen oder Maschinen und/oder für die Durchführung und Überwachung von industriellen Verbindungsprozessen und/oder Klebeprozessen und/oder für Laser-Schweißverfahren und/oder für Vernietungen und/oder für die Erfassung von Körpern in Flüssigkeiten und/oder in der Wasserüberwachung möglich.

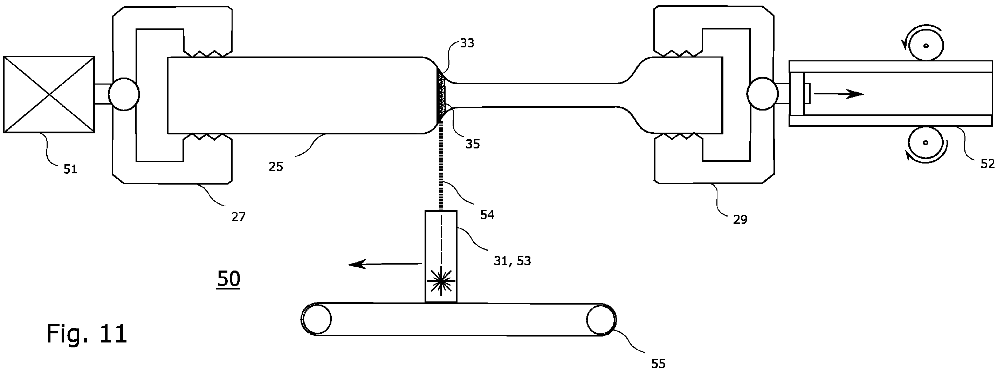

Fig. 11 zeigt eine Vorrichtung 50, mit der ein hantelförmiges Glaselement 2 gemäß dieser Offenbarung hergestellt werden kann. Zur Herstellung wird ein Glasstab 25 bereitgestellt und mit zwei Halterungen 27, 29 der Vorrichtung 50 gehaltert. Die Halterungen 27, 29 haltern den Glasstab 25 an dessen Enden, also an zwei in Längsrichtung des Glasstabs 25 beabstandeten Bereichen. Für die Heißumformung des Glasstabs wird eine Heizeinrichtung verwendet, um das Glas lokal zu erwärmen. Insbesondere ist dazu eine Strahlungsheizung geeignet. Im Speziellen ist eine Lichtquelle 31 vorgesehen, mit der ein ringförmiger Bereich 33 der Oberfläche des Glasstabs 25 beleuchtet wird. Es können aber auch andere Heizquellen alternativ oder insbesondere auch zusätzlich vorgesehen werden. Mit der oder den Heizeinrichtungen lassen sich dann örtlich und/oder zeitlich variable Heizprofile einstellen.

Vorzugsweise wird als Lichtquelle 31 ein hinreichend leistungsstarker Laser 53, beispielsweise ein $CO_2$-Laser verwendet. Um mit dem Laserstrahl 54 einen ringförmigen Bereich auf dem Glasstab 25 zu bestrahlen, ist in einer Ausführungsform allgemein, ohne Beschränkung auf das dargestellte Beispiel vorgesehen, dass der Glasstab 25 während der Bestrahlung mit der Lichtquelle 31 um seine Längsachse rotiert wird. Dazu weist die Vorrichtung 50 einen Antrieb 51 auf, mit dem die Halterung 27 und mit dieser der Glasstab 25 um dessen Längsachse rotiert werden kann. Mit der Lichtquelle 31 wird ein Längsabschnitt 35 des Glasstabs 25 so weit erwärmt, bis dieser erweicht. Typischerweise ist der Längsabschnitt 35 breiter als der von der Lichtquelle 31 bestrahlte ringförmige Bereich 33. Der Glasstab 25 wird nach dem Erweichen dann an den Halterungen 27, 29 auseinandergezogen, so dass sich der Glasstab 25 an dem erweichten Längsabschnitt verjüngt. Für das Auseinanderziehen ist eine Zugeinrichtung 52 vorgesehen, welche im dargestellten Beispiel auf die Halterung 29 wirkt. Gleichzeitig zur Zugbewegung, mit welcher der Glasstab 25 verjüngt und auseinandergezogen wird, werden auch der ringförmige Bereich 33 und der Glasstab 25 relativ zueinander entlang der Längsrichtung des Glasstabs 25 bewegt. Im dargestellten Beispiel ist dazu eine Vorschubeinrichtung 55 vorhanden, mit welcher der Auftreffpunkt des Laserstrahls 54 in Längsrichtung des Glasstabs 25 bewegt wird. Beide Bewegungen, nämlich das Auseinanderziehen und das Bewegen des ringförmigen Bereichs 33 über den Glasstab 25 erfolgen nach vorgegebenen Geschwindigkeitsprofilen. Demgemäß wird ein vorgegebenes Geschwindigkeitsprofil der Relativbewegung des ringförmigen Bereichs 33 und ein vorgegebenes Geschwindigkeitsprofil der Geschwindigkeit des Auseinanderziehens des Glasstabs 25 eingestellt, wobei die beiden Geschwindigkeitsprofile miteinander gekoppelt sind. Auf diese Weise kann die Verjüngung des Glasstabs 25 so kontrolliert werden, dass zwischen zwei endseitigen Längenabschnitten 5, 7 ein mittlerer Längenabschnitt 9 mit einer gegenüber der ersten Querschnittfläche der endseitigen Längenabschnitte 5, 7 um mindestens einen Faktor 1,2 verringerten zweiten, im mittleren Längsabschnitt gleichbleibenden Querschnittfläche gezogen wird, wobei der mittlere Längenabschnitt 9 an Übergangsabschnitten mit sich stetig vergrößerndem Querschnitt in die endseitigen Längenabschnitte 5, 7 übergeht.

Allgemein, ohne Beschränkung auf das dargestellte Beispiel erweist es sich als besonders vorteilhaft, das Glas nicht zu sehr zu erweichen. Bei einer zu starken Erweichung kann die Verformung schlechter durch die miteinander gekoppelten Bewegungen kontrolliert werden. Auch führt eine starke Erweichung zu einer Ausweitung des Bereichs, innerhalb dem das Glas verformbar ist. Dies führt ebenfalls zu einer geringeren Kontrolle der Verformbarkeit. Bei einer langgezogenen Verformungszone würde sich ein Übergangsbereich ausbilden, dessen Querschnittänderung nach der obigen Gleichung (1) erfolgt. Es ist daher gemäß einer bevorzugten Ausführungsform allgemein vorgesehen, dass der Glasstab 25 so aufgeheizt wird, dass die minimale Viskosität des Glases beim Auseinanderziehen des Glasstabs einen Wert von $\eta=10^4$ dPa·s nicht unterschreitet.

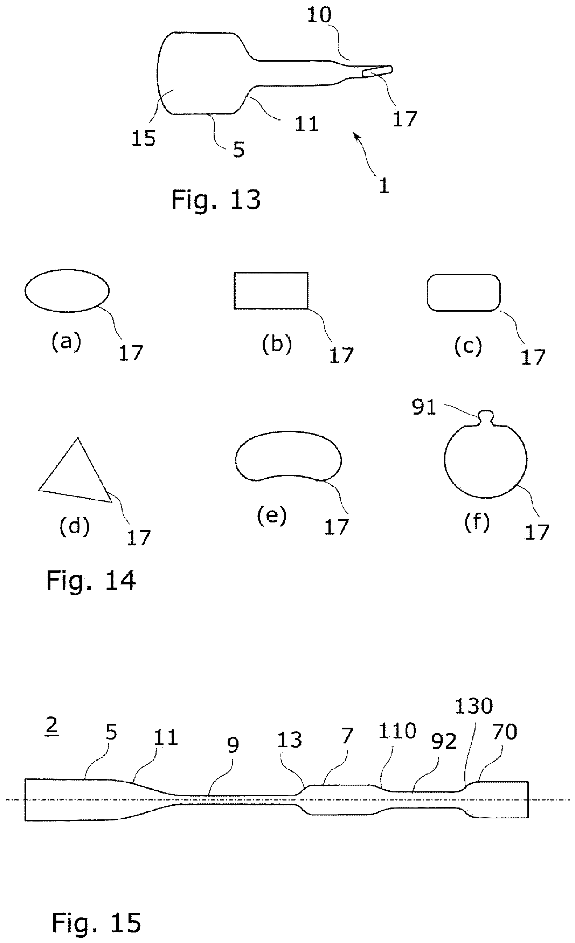

Bei den bisher beschriebenen Beispielen war nicht nur die Querschnittfläche des zweiten, mittleren Längenabschnitts gleichbleibend, sondern auch dessen Querschnittform. Es ist gemäß einer Weiterbildung auch möglich, die Querschnittform eines Längenabschnitts, vorzugsweises des zweiten Längenabschnitts zu ändern. Diese Änderung kann allgemein durch einen Heißpressvorgang erfolgen. Indem die Querschnittform zumindest eines Längenabschnitts 5, 7, 9 durch Heißpressen geändert wird, kann die Geometrie des damit hergestellten Lichtleiters beispielsweise an bestimmte Gegebenheiten, wie etwa die Bauform und gewünschte Geometrie eines Handstücks angepasst werden. Das Heißpressen erfolgt vorzugsweise nach dem Auseinanderziehen, also nach dem Herstellen der Verjüngung. Fig. 12 zeigt dazu in Seitenansicht eine Variante des Glaselements 2 gemäß Fig. 1. Bei dieser Variante weist der zweite Längenabschnitt 9 einen Abschnitt 90 mit geänderter Querschnittform auf. Insbesondere kann der Querschnitt durch das Heißpressen flacher werden, beziehungsweise von einer eher runden Form in eine abgeflachtere Form übergehen. Diese Abflachung muss aber nicht mit einer erheblichen Änderung der Querschnittfläche einhergehen. In der Ansicht der Fig. 12 ist zwar die seitliche Abmessung im Abschnitt 90 gegenüber dem übrigen Teil des zweiten Abschnitts 9 kleiner, dafür kann die seitliche Abmessung entlang der Blickrichtung größer sein, so dass die Querschnittfläche gleich bleibt. Fig. 13 zeigt zur Verdeutlichung einen aus dem Glaselement 2 hergestellten Lichtleiter 1 in perspektivischer Ansicht. Der Lichtleiter 1 wurde durch Auftrennen des Glaselements 2 am Abschnitt 90 hergestellt. Anhand von Fig. 13 ist deutlich die abgeflachte Form der durch Auftrennen erhaltenen Stirnfläche 17 des Lichtleiters 1 zu erkennen.

Fig. 14 zeigt verschiedene Querschnittformen, die durch Heißpressen im Abschnitt 90 hergestellt werden und dann dementsprechend auch die Form einer Stirnfläche 17 eines daraus hergestellten Lichtleiters 1 bilden können. Teilbild (a) zeigt einen elliptischen Querschnitt. Teilbild (b) stellt einen Abschnitt 90, beziehungsweise entsprechend eine Stirnfläche 17 mit rechteckigem Querschnitt dar. Teilbild (c) ist eine Variante eines rechteckigen Querschnitts mit abgerundeten Ecken. Der Querschnitt kann allgemein polygonal sein. Neben den Beispielen polygonaler Querschnitte gemäß Teilbilder (b) und (c) zeigt Teilbild (d) eine weitere Ausführungsform in Form eines dreieckigen Querschnitts. Teilbild (e) zeigt einen nierenförmigen Abschnitt mit entsprechend geformter Stirnfläche. Es können auch kleinere Strukturen durch Heißpressen ausgeformt werden. Teilbild (f) zeigt dazu ein Beispiel, bei welchem durch Heißpressen ein Rastelement 91 ausgeformt wurde. Das Rastelement 91 kann beispielsweise die Gestalt einer sich in Längsrichtung erstreckenden Rippe haben.

Selbstverständlich ist es auch möglich, nicht nur den zweiten, beziehungsweise mittleren Längenabschnitt 9 des Glaselements 2 durch Heißpressen zu verformen. Ebenso kann auch ein anderer Teil des Glaselements 2, wie etwa einer oder beide der ersten Längenabschnitte 5, 7 verformt werden. Ohne Beschränkung auf die Ausführungsbeispiele ist daher vorgesehen, dass das Glaselement 2, beziehungsweise der daraus hergestellte Lichtleiter 1 einen Längenabschnitt mit einer Querschnittform aufweist, welche sich von der Querschnittform benachbarter Abschnitte, insbesondere von einer runden Querschnittform unterscheidet. Wird diese abweichende, insbesondere nicht runde Querschnittform wie beschrieben durch Heißpressen hergestellt, weicht das Glas dem ausgeübten Druck im Wesentlichen seitlich aus. Damit ändert sich zwar die Querschnittform, die Querschnittfläche bleibt aber im Wesentlichen gleich. Daher ist gemäß noch einer Weiterbildung vorgesehen, dass das Glaselement 2 oder der Glas-Lichtleiter 1 einen in seiner Querschnittform zu zumindest einem benachbarten Abschnitt abweichenden Längenabschnitt aufweist, wobei die Querschnittflächen des Längenabschnitts und des benachbarten Längenabschnitts vorzugsweise gleich sind. Die gleich bleibende Querschnittfläche schließt dabei im Sinne dieser Offenbarung geringfügige, etwa durch einen Fluss des Glases beim Heißpressen in Längsrichtung verursachte Unterschiede ein. Die Unterschiede der Querschnittflächen betragen aber insbesondere nicht mehr als 5%.

Bei den bisherigen Beispielen waren die ersten Längenabschnitte 5, 7 gleichzeitig endseitige Längenabschnitte des Glaselements 2. Auch waren die Durchmesser oder Querschnittflächen dieser endseitigen Abschnitte gleich. Beides ist jedoch nicht zwingend. Weiterhin kann auch die Länge der beiden an den mittleren Längenabschnitt angrenzenden Übergangsabschnitte unterschiedlich sein. Fig. 15 zeigt dazu ein Beispiel eines Glaselements 2, das anders als das in Fig. 1 gezeigte Glaselement zwei zweite, beziehungsweise mittlere Längenabschnitte 9, 92 aufweist. Allgemein können also mehrere mittlere, zweite Längenabschnitte vorhanden sein. Die zweiten Längenabschnitte 9, 92 können sich auch, wie dargestellt, in ihrer Querschnittfläche, insbesondere in ihrem Durchmesser unterscheiden. Der zweite Längenabschnitt 9 ist in diesem Beispiel zwischen zwei ersten Längenabschnitten 5, 7 und der weitere zweite Längenabschnitt 92 zwischen den zwei ersten Längenabschnitten 7, 70 angeordnet. Die Querschnitte der verschiedenen Längenabschnitte ändern sich im Verlauf der Übergangsabschnitte 11, 13, 110 und 130. Gemäß einer weiteren Ausführungsform, welche auch im dargestellten Beispiel verwirklicht ist, weisen die Übergangsabschnitte eine unterschiedliche Länge auf. Bei dem gezeigten Beispiel ist der Übergangsabschnitt 11 deutlich länger als der Übergangsabschnitt 13. Dieses Merkmal ist auch nicht auf das Vorhandensein mehrerer zweiter, mittlerer Längenabschnitte beschränkt, sondern kann beispielsweise auch bei dem in Fig. 1 gezeigten Beispiel vorhanden sein.

<div align="center">Bezugszeichenliste</div>

| | |
|---|---|
| 1 | Glas-Lichtleiter |
| 2 | Glaselement |
| 3 | Lichtquelle |
| 5, 7, 9, 10, 70, 92 | Längenabschnitt |
| 11, 13, 110, 130 | Übergangsabschnitt |
| 15, 17 | Stirnfläche |
| 18 | minimal umgebendes Rechteck |
| 20 | Lichtemitter |
| 22 | Dental-Handstück |
| 25 | Glasstab |
| 27, 29 | Halterung |
| 31 | Lichtquelle |
| 33 | ringförmiger Bereich auf 25 |
| 35 | erwärmter Längsabschnitt |
| 37 | Kern |
| 39 | Mantel |
| 40 | Verlauf Querschnittfläche |
| 41 | Verlauf Vergleichsfunktion |
| 42 | Ableitung von 40 |
| 43 | Ableitung von 41 |
| 45 | Querschnittfläche von 5 |
| 46 | Querschnittfläche von 9, 10 |
| 47 | Mittelpunkt von 45 |
| 48 | Mittelpunkt von 46 |
| 49 | Abstand von 47, 48 in radialer Richtung |
| 50 | Vorrichtung zur Herstellung von 2 |
| 51 | Antrieb |
| 52 | Zugeinrichtung |
| 53 | Laser |
| 54 | Laserstrahl |

(fortgesetzt)

| 55 | Vorschubeinrichtung |
|---|---|
| 90 | Abschnitt mit geänderter Querschnittform |
| 91 | Rastelement |

**Patentansprüche**

1. Gezogenes Glaselement (2) zur Herstellung von Glas-Lichtleitern (1), umfassend

   - zwei erste Längenabschnitte (5, 7), welche eine erste Querschnittfläche aufweisen und die beiden Enden des Glaselements (2) bilden,
   - einen zwischen den ersten Längenabschnitten (5, 7) liegenden zweiten, mittleren Längenabschnitt (9) mit einer zweiten Querschnittfläche, kleiner ist als die erste Querschnittfläche der ersten Längenabschnitte (5, 7), sowie zwei Übergangsabschnitte (11, 13) jeweils zwischen dem mittleren Längenabschnitt (9) und den ersten Längenabschnitten (5, 7), wobei sich die Querschnittfläche des Glaselements entlang der Übergangsabschnitte (11, 13) kontinuierlich ändert und von der ersten Querschnittfläche in die zweite Querschnittfläche übergeht, wobei der Querschnitt A im mittleren Drittel der Übergangsabschnitte (11, 13) langsamer ansteigt als die Funktion

$$A(l) = A_2 + (A_1 - A_2) * \left[ \frac{1}{2} + \frac{1}{2}\tanh\left(6\frac{l-l_0}{l_u}\right) \right],$$

   wobei l die Längenkoordinate in mm ist, A1 die erste und A2 die zweite Querschnittfläche in mm$^2$, $l_u$ die Länge in mm des jeweiligen Übergangsabschnitts (11, 13) und $l_0$ die Längenkoordinate in mm der Mitte des Übergangsabschnitts (11, 13) bezeichnen.

2. Glaselement (2) gemäß dem vorstehenden Anspruch, **dadurch gekennzeichnet, dass** das Maximum der Änderung des Querschnitts pro Längeneinheit, dA(l)/dl, in einem Übergangsabschnitt (11, 13) größer ist als $(A_1-A_2)/l_u$ und kleiner ist als 2,4·(A1-A2)/$l_u$.

3. Glaselement (2) gemäß einem der vorstehenden Ansprüche, **gekennzeichnet durch** zumindest eines der Merkmale:

   - die zweite Querschnittfläche des mittleren Längenabschnitts (9) ist mindestens um einen Faktor 1,2 kleiner als die erste Querschnittfläche der ersten Längenabschnitte (5, 7),
   - der mittlere Längenabschnitt (9) weist eine Länge von mindestens dem dreifachen der Wurzel der zweiten Querschnittfläche auf,
   - das Verhältnis der Querschnittflächen Q1/Q2 der Querschnittfläche Q1 des der ersten Längenabschnitte (5, 7) zur Querschnittfläche Q2 des zweiten, mittleren Längenabschnitts (9) liegt in einem Bereich von 1,1 bis 100,
   - das Verhältnis D1/D2 des Durchmessers D1 der ersten Längenabschnitte (5, 7) zum Durchmesser D2 des zweiten, mittleren Längenabschnitts (9) liegt im Bereich von 1,1 bis 10,
   - die mittlere Änderung des Durchmessers im Übergangsabschnitt (11, 13) gemittelt über die Länge des Übergangsabschnitts (11, 13) liegt im Bereich von 0,01 bis 30, insbesondere im Bereich von 0,01 bis 3,
   - die mittlere Änderung der Querschnittfläche A pro Längeneinheit l in einem Übergangsabschnitt (11, 13) liegt im Bereich von 8·10$^{-5}$ mm$^2$/mm bis 7·10$^3$ mm$^2$/mm,
   - der Querschnitt A im mittleren Drittel der Übergangsabschnitte (11, 13) steigt langsamer an als die Funktion

$$A(l) = 0{,}95 * (A_1 - A_2) * \left[ \frac{1}{2} + \frac{1}{2}\tanh\left(6\frac{l-l_0}{l_u}\right) \right],$$

   wobei l die Längenkoordinate in mm, $A_1$ die erste und $A_2$ die zweite Querschnittfläche in mm$^2$, $l_u$ die Länge in mm des jeweiligen Übergangsabschnitts (11, 13) und $l_0$ in mm die Längenkoordinate der Mitte des Übergangsabschnitts (11, 13) bezeichnen,
   - das Glaselement weist mehrere zweite Längenabschnitte (9, 92) auf.
   - die Übergangsabschnitte (11, 13) weisen eine unterschiedliche Länge auf.

**4.** Glaselement (2) gemäß einem der vorstehenden Ansprüche, **dadurch gekennzeichnet, dass** die Querschnitte des zweiten, mittleren und der ersten Längenabschnitte (5, 7, 9) eine Form aufweisen, deren minimal umgebendes Rechteck ein Seitenverhältnis von maximal 3:1, vorzugsweise maximal 2:1 aufweisen.

**5.** Glaselement (2) gemäß einem der vorstehenden Ansprüche, **dadurch gekennzeichnet, dass** der zweite, mittlere Längenabschnitt konzentrisch zu mindestens einem der ersten Längenabschnitte (5, 7) angeordnet ist, so dass die Distanz der Mittelpunkte der Querschnitte in Längsrichtung gesehen kleiner als die halbe kleinste Querabmessung des Querschnitts des mittleren Abschnitts (9) ist.

**6.** Glaselement (2) gemäß einem der vorstehenden Ansprüche, **dadurch gekennzeichnet, dass** die größte Querabmessung der ersten Längenabschnitte (5, 7) kleiner als 50 mm, vorzugsweise kleiner als 30 mm, bevorzugt kleiner als 20 mm, besonders vorzugsweise kleiner als 15 mm beträgt.

**7.** Gezogener Glas-Lichtleiter (1), hergestellt durch Auftrennung des hantelförmigen Glaselements (2) gemäß einem der vorstehenden Ansprüche am mittleren Längenabschnitt (9), umfassend

- einen ersten Längenabschnitt (5), der an einer ersten Stirnfläche (15) des Lichtleiters (1) zur Lichteinkopplung oder Lichtauskopplung endet, wobei der erste Längenabschnitt (5) eine erste Querschnittfläche aufweist, und
- einen zweiten Längenabschnitt (10) mit einer zweiten Querschnittfläche, der in einer zweiten Stirnfläche (17) zur Lichteinkopplung oder Lichtauskopplung endet, so dass Licht im Lichtleiter (1) an einer der Stirnflächen (15, 17) eingekoppelt und an der anderen Stirnfläche (17, 15) ausgekoppelt werden kann, wobei die Querschnittfläche des ersten Längenabschnitts (5) größer ist, als die Querschnittfläche des zweiten Längenabschnitts (10), und wobei
- sich die Querschnittfläche in einem Übergangsabschnitt (11) zwischen dem ersten Längenabschnitt (5) und dem zweiten Längenabschnitt (10) kontinuierlich ändert, derart, dass sich der Übergangsabschnitt vom ersten Längenabschnitt (5) zum zweiten Längenabschnitt (10) hin verjüngt, wobei der Querschnitt A im mittleren Drittel des Übergangsabschnitte (11, 13) langsamer ansteigt als die Funktion

$$A(l) = A_2 + (A_1 - A_2) * \left[\frac{1}{2} + \frac{1}{2}\tanh\left(6\frac{l-l_0}{l_u}\right)\right],$$

wobei 1 die Längenkoordinate in mm, $A_1$ die erste und $A_2$ die zweite Querschnittfläche in mm$^2$, $l_u$ die Länge in mm des Übergangsabschnitt (11) und $l_0$ die Längenkoordinate in mm der Mitte des Übergangsabschnitts (11) bezeichnen.

**8.** Glas-Lichtleiter (1) gemäß dem vorstehenden Anspruch, **gekennzeichnet durch** zumindest eines der Merkmale:

- die Querschnittfläche des ersten Längenabschnitts (5) mindestens um einen Faktor 1,2 größer ist, als die Querschnittfläche des zweiten Längenabschnitts (10),
- der zweite Längenabschnitt (10) weist eine Länge von mindestens dem 1,5-fachen, vorzugsweise mindestens dem dreifachen der Wurzel der zweiten Querschnittfläche auf,
- das Verhältnis der Querschnittflächen Q1/Q2 der Querschnittfläche Q1 des ersten Längenabschnitts (5) zur Querschnittfläche Q2 des zweiten Längenabschnitts (10) liegt in einem Bereich von 1,1 bis 100,
- das Verhältnis D1/D2 des Durchmessers D1 des ersten Längenabschnittes (5) zum Durchmesser D2 des zweiten Längenabschnitts (10) liegt im Bereich von 1,1 bis 10,
- die mittlere Änderung des Durchmessers im Übergangsabschnitt (11) gemittelt über die Länge des Übergangsabschnitts (11) liegt im Bereich von 0,01 bis 30, vorzugsweise im Bereich von 0,01 bis 3,
die mittlere Änderung der Querschnittfläche A pro Längeneinheit 1 im Übergangsabschnitt (11) liegt im Bereich von $8 \cdot 10^{-5}$ mm$^2$/mm bis $7 \cdot 10^3$ mm$^2$/mm
- der Querschnitt A im mittleren Drittel der Übergangsabschnitte (11, 13) steigt langsamer an, als die Funktion

$$A(l) = 0{,}95 * (A_1 - A_2) * \left[\frac{1}{2} + \frac{1}{2}\tanh\left(6\frac{l-l_0}{l_u}\right)\right],$$

wobei 1 die Längenkoordinate in mm, $A_1$ die erste und $A_2$ die zweite Querschnittfläche in mm$^2$, $l_u$ die Länge in mm des jeweiligen Übergangsabschnitts (11, 13) und $l_0$ die Längenkoordinate in mm der Mitte des Übergangsabschnitts (11, 13) bezeichnen.

9. Glas-Lichtleiter (1) gemäß einem der vorstehenden Ansprüche 7 bis 8, **dadurch gekennzeichnet, dass** der Glas-Lichtleiter (1) mehrere lichtleitende Kerne (37) aufweist, die in einem gemeinsamen Mantel (39) verlaufen.

10. Lichtquelle (3) mit einem gezogenen Glas-Lichtleiter (1) gemäß einem der vorstehenden Ansprüche 7 bis 9, sowie mindestens einem Lichtemitter (20) der so angeordnet ist, dass dessen Licht über die Stirnfläche (15) am ersten Längenabschnitt (5) in den Lichtleiter (1) eingekoppelt wird und nach Durchlaufen des Lichtleiters an der anderen Stirnfläche (17) am zweiten Längenabschnitt (10) wieder austritt.

11. Verwendung einer Lichtquelle (3) gemäß dem vorstehenden Anspruch, zum Aushärten von Kunststoffen, in einem Gerät zum Erkennen von Zelltypen, insbesondere Krebszellen, für Anwendungen im Bereich der Dentalmedizin, insbesondere in einem Dental-Aushärtegerät, in einem Gerät zum Erkennen von Karies, in dentalen Handstücken, in dentalen Winkelstücken, in chirurgischen Geräten, in diagnostischen Geräten, insbesondere in Hautanalyse-Geräten, Otoskopen oder Endoskopen, für eine lichtinduzierte Behandlung von Entzündungen im Hals-/Rachenraum (Mukositis), Augenheilkunde (Ophthalmie) sowie Dermatologie.

   oder Verwendung der Lichtquelle (3) mit einem gezogenen Glas-Lichtleiter (1) gemäß Anspruch 9 für ein Inspektionssystem zur Überwachung von Anlagen
   oder Maschinen und/oder für die Durchführung und Überwachung von industriellen Verbindungsprozessen und/oder Klebeprozessen und/oder für Laser-Schweißverfahren und/oder für Vernietungen und/oder für die Erfassung von Körpern in Flüssigkeiten und/oder in der Wasserüberwachung.

12. Verfahren zur Herstellung eines Glaselements (2) gemäß einem der vorstehenden Ansprüche 1-6 oder eines gezogenen Glas-Lichtleiters (1) gemäß einem der vorstehenden Ansprüche 7 bis 9, gemäß welchem

   - ein Glasstab (25) bereitgestellt und mit zwei Halterungen (27, 29) gehaltert wird, wobei die Halterungen den Glasstab (25) an zwei in Längsrichtung des Glasstabs (25) beabstandeten Bereichen halten, und
   - mit einer Heizeinrichtung ein ringförmiger Bereich (33) der Oberfläche und damit ein Längsabschnitt (35) des Glasstabs (25) so weit erwärmt wird, bis dieser erweicht,
   - der Glasstab (25) dann an den Halterungen auseinandergezogen wird, so dass sich der Glasstab (25) an dem erweichten Längsabschnitt verjüngt, und wobei der ringförmige Bereich (33) und der Glasstab (25) relativ zueinander entlang der Längsrichtung des Glasstabs (25) bewegt werden, wobei beim Auseinanderziehen und Bewegen des ringförmigen Bereichs ein vorgegebenes Geschwindigkeitsprofil der Relativbewegung und ein vorgegebenes Geschwindigkeitsprofil der Geschwindigkeit des Auseinanderziehens des Glasstabs (25) eingestellt werden, wobei die beiden Geschwindigkeitsprofile miteinander gekoppelt sind, so dass zwischen zwei ersten Längenabschnitten (5, 7) ein zwischen den ersten Längenabschnitten liegender zweite, mittlerer Längenabschnitt (9) mit einer gegenüber der ersten Querschnittfläche der endseitigen Längenabschnitte (5, 7) um mindestens einen Faktor 1,2 verringerten zweiten Querschnittfläche gezogen wird, der an Übergangsabschnitten mit sich stetig vergrößerndem Querschnitt in die endseitigen Längenabschnitte (5, 7) übergeht.

13. Verfahren gemäß dem vorstehenden Anspruch, **gekennzeichnet durch** zumindest eines der folgenden Merkmale:

   - der ringförmige Bereich (33) wird mit einem Laser (54) beheizt
   - der ringförmige Bereich (33) wird mit einem Laser (54) beheizt und der Glasstab (25) wird während der Bestrahlung mit der Lichtquelle (31) um seine Längsachse rotiert,
   - die Querschnittform zumindest eines Längenabschnitts (5, 7, 9) wird durch Heißpressen geändert.

## Claims

1. A drawn glass element (2) for producing glass optical waveguides (1), comprising

   - two first length portions (5, 7) exhibiting a first cross-sectional area and defining the two ends of the glass element (2);
   - a second, intermediate length portion (9) located between said first length portions (5, 7), which exhibits a second cross-sectional area smaller than the first cross-sectional area of the first length portions (5, 7), and two transition portions (11, 13), a respective one between the intermediate length portion (9) and each of the first length portions (5, 7), wherein, along the transition portions (11, 13), the cross-sectional area of the glass element steadily changes and merges from the first cross-sectional area into the second cross-sectional area;

wherein in a central third of the transition portions (11, 13) cross section A increases more slowly than the function

$$A(l) = A_2 + (A_1 - A_2) * \left[\frac{1}{2} + \frac{1}{2}\tanh\left(6\frac{l-l_0}{l_u}\right)\right],$$

wherein l is the length coordinate in mm, $A_1$ is the first and $A_2$ is the second cross-sectional area in $mm^2$, $l_u$ is the length in mm of the respective transition portion (11, 13) and $l_0$ is the length coordinate in mm of the midpoint of the transition portion (11, 13).

2. The glass element (2) according to the preceding claim, **characterised in that** the maximum change in cross section per unit length, dA(l)/dl, in a transition portion (11, 13) is greater than $(A_1 - A_2)/l_u$ and is less than $2.4 \cdot (A_1 - A_2)/l_u$.

3. The glass element (2) according to any one of the preceding claims, **characterised by** at least one of the following features:

   - the second cross-sectional area of the intermediate length portion (9) is smaller than the first cross-sectional area of the first length portions (5, 7) by at least a factor of 1.2;
   - the intermediate length portion (9) has a length of at least three times the square root of the second cross-sectional area;
   - the ratio of cross-sectional areas Q1/Q2 of the cross-sectional area Q1 of the first length portions (5, 7) to the cross-sectional area Q2 of the second, intermediate length portion (9) is in a range from 1.1 to 100;
   - the ratio D1/D2 of the diameter D1 of the first length portions (5, 7) to the diameter D2 of the second, intermediate length portion (9) is in a range from 1.1 to 10;
   - the mean change in diameter in the transition area (11, 13) averaged over the length of the transition area (11, 13) is in a range from 0.01 to 30, in particular in a range from 0.01 to 3;
   - the mean change in cross-sectional area A per unit length l in a transition area (11, 13) is in a range from $8\cdot10^{-5}$ $mm^2/mm$ to $7\cdot10^3$ $mm^2/mm$;
   - the cross section A in the central third of the transition portions (11, 13) increases more slowly than the function

$$A(l) = 0.95 * (A_1 - A_2) * \left[\frac{1}{2} + \frac{1}{2}\tanh\left(6\frac{l-l_0}{l_u}\right)\right],$$

   wherein l is the length coordinate in mm, $A_1$ is the first and $A_2$ is the second cross-sectional area in $mm^2$, $l_u$ is the length in mm of the respective transition portion (11, 13) and $l_0$ in mm is the length coordinate of the midpoint of the transition portion (11, 13);
   - the glass element comprises a plurality of second length portions (9, 92);
   - the transition portions (11, 13) have different lengths.

4. The glass element (2) according to any one of the preceding claims, **characterised in that** the cross sections of the second, intermediate and of the first length portions (5, 7, 9) have a shape fitting in a smallest surrounding rectangle with an aspect ratio of at most 3:1, preferably at most 2:1.

5. The glass element (2) according to any one of the preceding claims, **characterised in that** the second, intermediate length portion is arranged concentrically to at least one of the first length portions (5, 7), so that the center-to-center distance of the cross sections as seen in the longitudinal direction is smaller than half the smallest lateral dimension of the cross section of the intermediate portion (9).

6. The glass element (2) according to any one of the preceding claims, **characterised in that** the largest lateral dimension of the first length portions (5, 7) is less than 50 mm, preferably less than 30 mm, more preferably less than 20 mm, most preferably less than 15 mm.

7. A drawn glass optical waveguide (1), producible by severing the dumbbell-shaped glass element (2) according to any one of the preceding claims in the intermediate length portion (9), comprising

   - a first length portion (5) which terminates at a first end face (15) of the optical waveguide (1) for injection of light or emission of light, said first length portion (5) exhibiting a first cross-sectional area; and
   - a second length portion (10) exhibiting a second cross-sectional area, which terminates at a second end face (17) for injection of light or emission of light, so that light can be injected into the optical waveguide (1) at one of the end faces (15, 17) and can be emitted at the other end face (17, 15),
wherein the cross-sectional area of the first length portion (5) is larger than the cross-sectional area of the second length portion (10); and wherein
- the cross-sectional area steadily changes in a transition portion (11) between the first length portion (5) and the second length portion (10) such that the transition portion tapers from the first length portion (5) to the second length portion (10), wherein in a central third of the transition portion (11, 13), cross section A increases more slowly than the function

$$A(l) = A_2 + (A_1 - A_2) * \left[\tfrac{1}{2} + \tfrac{1}{2}\tanh\left(6\tfrac{l-l_0}{l_u}\right)\right],$$

wherein l is the length coordinate in mm, $A_1$ is the first and $A_2$ is the second cross-sectional area in $mm^2$, $l_u$ is the length in mm of the respective transition portion (11), and $l_0$ is the length coordinate in mm of the midpoint of the transition portion (11).

8. The glass optical waveguide (1) according to the preceding claim, **characterised by** at least one of the following features:

- the cross-sectional area of the first length portion (5) is larger than the cross-sectional area of the second length portion (10) by at least a factor of 1.2;
- the second length portion (10) has a length of at least 1.5 times, preferably at least three times the square root of the second cross-sectional area;
- the ratio of cross-sectional areas Q1/Q2 of the cross-sectional area Q1 of the first length portion (5) to the cross-sectional area Q2 of the second length portion (10) is in a range from 1.1 to 100;
- the ratio D1/D2 of the diameter D1 of the first length portion (5) to the diameter D2 of the second length portion (10) is in a range from 1.1 to 10;
- the mean change in diameter in the transition area (11) averaged over the length of the transition area (11) is in a range from 0.01 to 30, preferably in a range from 0.01 to 3;
- the mean change in cross-sectional area A per unit length l in the transition area (11) is in a range from $8 \cdot 10^{-5}$ $mm^2/mm$ to $7 \cdot 10^3$ $mm^2/mm$;
- the cross section A in the central third of the transition portions (11, 13) increases more slowly than the function

$$A(l) = 0.95 * (A_1 - A_2) * \left[\tfrac{1}{2} + \tfrac{1}{2}\tanh\left(6\tfrac{l-l_0}{l_u}\right)\right],$$

wherein l is the length coordinate in mm, $A_1$ is the first and $A_2$ is the second cross-sectional area in $mm^2$, $l_u$ is the length in mm of the respective transition portion (11, 13), and $l_0$ is the length coordinate in mm of the midpoint of the transition portion (11, 13).

9. The glass optical waveguide (1) according to any one of the preceding claims 7 to 8, **characterised in that** the glass optical waveguide (1) comprises a plurality of light-conducting cores (37) which extend through a common cladding (39).

10. A light source (3) comprising a drawn glass optical waveguide (1) according to any one of the preceding claims 7 to 9 and at least one light emitter (20) disposed so as to inject light into the optical waveguide (1) via the end face (15) at the first length portion (5) to be emitted at the other end face (17) at the second length portion (10) after passing through the optical waveguide.

11. Use of a light source (3) according to the preceding claim for curing plastic materials, in a device for identifying cell types, in particular cancer cells, for applications in the field of dental medicine, in particular in a dental curing device, in a device for detecting caries, in dental handpieces, in dental contra-angles, in surgical devices, in diagnostic devices, in particular in skin analysis devices, in otoscopes or endoscopes, for light-induced treatment of inflammations in the throat/pharynx (mucositis), in ophthalmology (ophthalmia), and in dermatology; or use of the light source (3) comprising a drawn glass optical waveguide (1) according to claim 9 for an inspection system for monitoring systems or machines and/or for performing and monitoring industrial joining processes and/or adhesive processes and/or for laser welding processes and/or for riveting and/or for detecting bodies in liquids and/or in water monitoring.

12. A method for producing a glass element (2) according to any one of the preceding claims 1 to 6 or of a drawn glass optical waveguide (1) according to any one of the preceding claims 7 to 9, according to which

- a glass rod (25) is provided and is supported using two brackets (27, 29), the brackets supporting the glass rod (25) in two areas spaced apart in the longitudinal direction of the glass rod (25); and
- an annular area (33) of the surface and thus a length portion (35) of the glass rod (25) is heated until it softens, by using a heating device;
- subsequently the glass rod (25) is drawn apart at the brackets so that the glass rod (25) tapers along the softened length portion, and wherein the annular area (33) and the glass rod (25) are shifted relative to one another along the longitudinal extension of the glass rod (25), while a predetermined speed profile of the relative movement and a predetermined speed profile for the rate of drawing apart the glass rod (25) is set for the drawing apart and for the shifting of the annular area, the two speed profiles being interlinked such that between two first length portions (5, 7) a second, intermediate length portion (9) is drawn so as to exhibit a second cross-sectional area that is reduced by at least a factor of 1.2 compared to the first cross-sectional area of the end-side length portions (5, 7), which intermediate length portion merges into the end-side length portions (5, 7) along transition portions that exhibit a steadily increasing cross section.

13. The method according to the preceding claim, **characterized by** at least one of the following features:

- the annular area (33) is heated using a laser (54);
- the annular area (33) is heated using a laser (54) and the glass rod (25) is rotated about its longitudinal axis while being irradiated by the light source (31);
- the cross-sectional shape of at least one length portion (5, 7, 9) is modified by hot pressing.

**Revendications**

1. Élément en verre (2) étiré pour la fabrication de guides de lumière (1) en verre, comprenant

- deux premières sections longitudinales (5, 7), qui présentent une première surface de section transversale et forment les deux extrémités de l'élément en verre (2),
- une seconde section longitudinale centrale (9) située entre les premières sections longitudinales (5, 7) avec une seconde surface de section transversale, qui est plus petite que la première surface de section transversale des premières sections longitudinales (5, 7), ainsi que deux sections de transition (11, 13) respectivement entre la section longitudinale centrale (9) et les premières sections longitudinales (5, 7), dans lequel la surface de section transversale de l'élément en verre varie en continu le long des sections de transition (11, 13) et passe de la première surface de section transversale dans la seconde surface de section transversale, dans lequel la section transversale A augmente plus lentement dans le tiers central des sections de transition (11, 13) que la fonction

$$A(l) = A_2 + (A_1 - A_2) * \left[\frac{1}{2} + \frac{1}{2}\tanh\left(6\frac{l-l_0}{l_u}\right)\right] ,$$

dans lequel l est la coordonnée de longueur en mm, A1 désigne la première et A2 la seconde surface de section transversale en mm$^2$, $l_u$ la longueur en mm de la section de transition (11, 13) respective et $l_0$ la coordonnée de longueur en mm du centre de la section de transition (11, 13) .

2. Élément en verre (2) selon la revendication précédente, **caractérisé en ce que** le maximum de variation de la section transversale par unité de longueur, dA(l)/dl, dans une section de transition (11, 13) est supérieur à $(A_1-A_2)/l_u$ et inférieur à $2,4 \cdot (A1-A2)/l_u$.

3. Élément en verre (2) selon l'une quelconque des revendications précédentes, **caractérisé par** au moins l'une des caractéristiques :

- la seconde surface de section transversale de la section longitudinale centrale (9) est plus petite au moins d'un facteur 1,2 que la première surface de section transversale des premières sections longitudinales (5, 7),
- la section longitudinale centrale (9) présente une longueur d'au moins trois fois la racine de la seconde surface de section transversale,

- le rapport des surfaces de section transversale Q1/Q2 de la surface de section transversale Q1 de la des premières sections longitudinales (5, 7) à la surface de section transversale Q2 de la seconde section longitudinale centrale (9) se situe dans une plage de 1,1 à 100,

- le rapport D1/D2 du diamètre D1 des premières sections longitudinales (5, 7) au diamètre D2 de la seconde section longitudinale centrale (9) se situe dans la plage de 1,1 à 10,

- la variation moyenne du diamètre dans la section de transition (11, 13) en moyenne sur la longueur de la section de transition (11, 13) se situe dans la plage de 0,01 à 30, en particulier dans la plage de 0,01 à 3,

- la variation moyenne de la surface de section transversale A par unité de longueur 1 dans une section de transition (11, 13) se situe dans la plage de $8 \cdot 10^{-5}$ mm$^2$/mm à $7 \cdot 10^3$ mm$^2$/mm,

- la section transversale A dans le tiers central des sections de transition (11, 13) augmente plus lentement que la fonction

$$A(l) = 0{,}95 * (A_1 - A_2) * \left[\frac{1}{2} + \frac{1}{2}\tanh\left(6\frac{l-l_0}{l_u}\right)\right],$$

dans lequel l désigne la coordonnée de longueur en mm, $A_1$ la première et $A_2$ la seconde surface de section transversale en mm$^2$, $l_u$ la longueur en mm de la section de transition (11, 13) respective et $l_0$ en mm la coordonnée de longueur du centre de la section de transition (11, 13),

- l'élément en verre présente plusieurs secondes sections longitudinales (9, 92),

- les sections de transition (11, 13) présentent une longueur différente.

4. Élément en verre (2) selon l'une quelconque des revendications précédentes, **caractérisé en ce que** les sections transversales de la seconde section longitudinale centrale et des premières sections longitudinales (5, 7, 9) présentent une forme dont le rectangle environnant minimal présente un rapport d'aspect maximal de 3:1, de préférence maximal de 2:1.

5. Élément en verre (2) selon l'une quelconque des revendications précédentes, **caractérisé en ce que** la seconde section longitudinale centrale est disposée de manière concentrique par rapport à au moins l'une des premières sections longitudinales (5, 7), de sorte que la distance entre les centres des sections transversales vue dans la direction longitudinale est inférieure à la moitié de la plus petite dimension transversale de la section transversale de la section centrale (9).

6. Élément en verre (2) selon l'une quelconque des revendications précédentes, **caractérisé en ce que** la plus grande dimension transversale des premières sections longitudinales (5, 7) est inférieure à 50 mm, de préférence inférieure à 30 mm, de préférence inférieure à 20 mm, de manière particulièrement préférée inférieure à 15 mm.

7. Guide de lumière (1) en verre étiré, fabriqué par séparation de l'élément en verre (2) en forme d'haltère selon l'une quelconque des revendications précédentes sur la section longitudinale centrale (9), comprenant

- une première section longitudinale (5) qui se termine sur une première surface frontale (15) du guide de lumière (1) pour l'injection de lumière ou l'extraction de lumière, dans lequel la première section longitudinale (5) présente une première surface de section transversale, et

- une seconde section longitudinale (10) avec une seconde surface de section transversale, qui se termine dans une seconde surface frontale (17) pour l'injection de lumière ou l'extraction de lumière, de sorte que la lumière dans le guide de lumière (1) peut être injectée sur une des surfaces frontales (15, 17) et extraite sur l'autre surface frontale (17, 15), dans lequel la surface de section transversale de la première section longitudinale (5) est plus grande que la surface de section transversale de la seconde section longitudinale (10), et dans lequel

- la surface de section transversale dans une section de transition (11) entre la première section longitudinale (5) et la seconde section longitudinale (10) varie en continu, de sorte que la section de transition se rétrécit de la première section longitudinale (5) à la seconde section longitudinale (10), dans lequel la section transversale A dans le tiers central de la section de transition (11, 13) augmente plus lentement que la fonction

$$A(l) = A_2 + (A_1 - A_2) * \left[\frac{1}{2} + \frac{1}{2}\tanh\left(6\frac{l-l_0}{l_u}\right)\right],$$

dans lequel l désigne la coordonnée de longueur en mm, $A_1$ la première et $A_2$ la seconde surface de section transversale en mm$^2$, $l_u$ la longueur en mm de la section de transition (11) et $l_0$ la coordonnée de longueur en mm du centre de la section de transition (11).

8. Guide de lumière (1) en verre selon la revendication précédente, **caractérisé par** au moins l'une des caractéristiques :

- la surface de section transversale de la première section longitudinale (5) est plus grande d'au moins un facteur 1,2 que la surface de section transversale de la seconde section longitudinale (10),
- la seconde section longitudinale (10) présente une longueur d'au moins 1,5 fois, de préférence au moins trois fois la racine de la seconde surface de section transversale,
- le rapport des surfaces de section transversale Q1/Q2 de la surface de section transversale Q1 de la première section longitudinale (5) à la surface de section transversale Q2 de la seconde section longitudinale (10) se situe dans une plage de 1,1 à 100,
- le rapport D1/D2 du diamètre D1 de la première section longitudinale (5) au diamètre D2 de la seconde section longitudinale (10) se situe dans la plage de 1,1 à 10,
- la variation moyenne du diamètre dans la section de transition (11) en moyenne sur la longueur de la section de transition (11) se situe dans la plage de 0,01 à 30, de préférence dans la plage de 0,01 à 3,
la variation moyenne de la surface de section transversale A par unité de longueur l dans la section de transition (11) se situe dans la plage de $8 \cdot 10^{-5}$ mm$^2$/mm à $7 \cdot 10^{3}$ mm$^2$/mm
- la section transversale A dans le tiers central des sections de transition (11, 13) augmente plus lentement que la fonction

$$A(l) = 0{,}95 * (A_1 - A_2) * \left[\tfrac{1}{2} + \tfrac{1}{2}\tanh\left(6\tfrac{l-l_0}{l_u}\right)\right],$$

dans lequel l désigne la coordonnée de longueur en mm, $A_1$ la première et $A_2$ la seconde surface de section transversale en mm$^2$, $l_u$ la longueur en mm de la section de transition (11, 13) respective et $l_0$ la coordonnée de longueur en mm du centre de la section de transition (11, 13).

9. Guide de lumière (1) en verre selon l'une quelconque des revendications 7 à 8 précédentes, **caractérisé en ce que** le guide de lumière (1) en verre présente plusieurs noyaux conducteurs de lumière (37) qui s'étendent dans une gaine (39) commune.

10. Source de lumière (3) avec un guide de lumière (1) en verre étiré selon l'une quelconque des revendications 7 à 9 précédentes, ainsi qu'au moins un émetteur de lumière (20) qui est disposé de sorte que sa lumière soit injectée dans le guide de lumière (1) par la surface frontale (15) sur la première section longitudinale (5) et ressorte sur l'autre surface frontale (17) sur la seconde section longitudinale (10) après avoir traversé le guide de lumière.

11. Utilisation d'une source de lumière (3) selon la revendication précédente, pour le durcissement de matières plastiques, dans un appareil de détection de types de cellules, en particulier cellules cancéreuses, pour des applications dans le domaine de la médecine dentaire, en particulier dans un appareil de durcissement dentaire, dans un appareil de détection de caries, dans des pièces à main dentaires, dans des pièces coudées dentaires, dans des appareils chirurgicaux, dans des appareils de diagnostic, en particulier dans des appareils d'analyse cutanée, des otoscopes ou endoscopes, pour un traitement induit par la lumière des inflammations de la gorge et du pharynx (mucosite), en ophtalmologie (opthalmie) ainsi qu'en dermatologie.
ou utilisation de la source de lumière (3) avec un guide de lumière (1) en verre étiré selon la revendication 9 pour un système d'inspection pour la surveillance d'installations ou de machines et/ou pour la réalisation et la surveillance de processus d'assemblage industriels et/ou processus de collage et/ou pour des procédés de soudage laser et/ou pour des rivetages et/ou pour la détection de corps dans des liquides et/ou dans la surveillance de l'eau.

12. Procédé de fabrication d'un élément en verre (2) selon l'une quelconque des revendications 1-6 précédentes ou d'un guide de lumière (1) en verre étiré selon l'une quelconque des revendications 7 à 9 précédentes, selon lequel

- une tige de verre (25) est fournie et maintenue avec deux éléments de retenue (27, 29), dans lequel les éléments de retenue maintiennent la tige de verre (25) sur deux zones espacées dans la direction longitudinale de la tige de verre (25), et
- une zone annulaire (33) de la surface et ainsi une section longitudinale (35) de la tige de verre (25) est chauffée avec un dispositif de chauffage jusqu'à ce qu'elle ramollisse,
- la tige de verre (25) est alors écartée au niveau des éléments de retenue, de sorte que la tige de verre (25) se rétrécit au niveau de la section longitudinale ramollie, et dans lequel la zone annulaire (33) et la tige de verre (25) sont déplacées l'une par rapport à l'autre le long de la direction longitudinale de la tige de verre (25), dans lequel lors de l'écartement et du déplacement de la zone annulaire, un profil de vitesse prédéfini du mouvement relatif et un profil de vitesse prédéfini de la vitesse d'écartement de la tige de verre (25) sont réglés, dans lequel les deux profils de vitesse sont couplés entre eux, de sorte qu'une seconde section longitudinale centrale (9) située entre les premières sections longitudinales (5, 7) avec une seconde surface de section transversale réduite d'au moins un facteur 1,2 par rapport à la première surface de section transversale des sections longitudinales (5, 7) côté extrémité est étirée, qui passe dans les sections longitudinales (5, 7) côté extrémité sur des sections de transition avec une section transversale augmentant progressivement.

**13.** Procédé selon la revendication précédente, **caractérisé par** au moins l'une des caractéristiques suivantes :

- la zone annulaire (33) est chauffée avec un laser (54)
- la zone annulaire (33) est chauffée avec un laser (54) et la tige de verre (25) est amenée en rotation autour de son axe longitudinal pendant l'irradiation avec la source de lumière (31),
- la forme de section transversale d'au moins une section longitudinale (5, 7, 9) est modifiée par pressage à chaud.

Fig. 1

Fig. 2

Fig. 3

Fig. 4

EP 3 931 159 B1

Fig. 5

Fig. 6

Fig. 7

Fig. 8

45    46

47    48
49

## Fig. 9

3, 22

10    11    5    20

17    15

## Fig. 10

90

5    11    2    9    13    7

## Fig. 12

Fig. 11

EP 3 931 159 B1

Fig. 13

Fig. 14

Fig. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6658896 B2
- US 7305166 B1
- US 2007201802 A1
- US 4820321 A
- US 20030138753 A1
- US 20130236153 A1